# EUROPEAN PATENT APPLICATION

(11) **EP 4 838 760 A1**
(43) Date of publication of application: **11.11.2026**
(21) Application number: 26175809.8
(22) Date of filing: 30.04.2026
(51) Int. Cl.: H02K 3/28, H02K 3/12

(54) **FLAT WIRE MOTOR, POWERTRAIN, AND VEHICLE**

(30) Priority: 06.05.2025 CN 202510581806
(71) Applicant: HUAWEI TECHNOLOGIES CO., LTD., Shenzhen 518129 (CN)
(72) Inventor: LUO, Dong, Shenzhen, 518129 (CN); XU, Bo, Shenzhen, 518129 (CN); ZHANG, Bowen, Shenzhen, 518129 (CN)
(74) Representative: Gill Jennings & Every LLP

(57) **Abstract**

Embodiments of this application relate to the field of flat wire motor technologies, and provide a flat wire motor, a powertrain, and a vehicle, to resolve a problem of a complex winding structure of a two-branch stator winding. In the flat wire motor, each group of branch flat wires in each circle of flat wires includes a plurality of first groups of flat wires and a plurality of second groups of flat wires, and each first group of flat wires includes two flat wires. A plurality of first groups of flat wires and a plurality of second groups of flat wires of each group of branch flat wires in each layer of flat wires are alternately arranged in a circumferential direction of a motor stator, and two groups of branch flat wires configured to transmit a same-branch alternating current in two adjacent layers of flat wires are arranged in a staggered manner in the circumferential direction of the motor stator, so that flat wires of two branches configured to transmit a same-phase alternating current are evenly distributed in a plurality of stator slots. This helps make wiring of the stator winding more orderly, helps reduce flat wire types of the stator winding, and helps make a structure of the stator winding symmetrical, thereby improving NVH performance of the flat wire motor.

## Description

### TECHNICAL FIELD

This application relates to the field of flat wire motor technologies, and in particular, to a flat wire motor, a powertrain, and a vehicle.

### BACKGROUND

A flat wire motor is a motor that uses a flat rectangular wire as a stator winding. Compared with a motor using a circular wire, the flat wire motor has a high copper filling rate and higher power density, efficiency, and heat dissipation performance, and is widely used in fields of new energy vehicles, industrial equipment, and the like. The stator winding of the flat wire motor includes an integral slot winding and a fractional slot winding. In the field of new energy vehicles, a flat wire motor with an integral slot winding is used in scenarios such as drive motors and generators. A flat wire motor with a fractional slot winding is used in scenarios such as disc motors, hub motors, and extended-range generators.

In existing fractional slot windings, a two-branch winding has a large number of wire types and a complex winding structure, and is prone to problems such as uneven conductor distribution and a circulating current between branches.

### SUMMARY

This application provides a flat wire motor, a powertrain, and a vehicle, to reduce a number of wire types of a stator winding and simplify a structure of the stator winding.

To achieve the foregoing objective, the following technical solutions are used in this application.

According to a first aspect of this application, a flat wire motor is provided. A motor stator of the flat wire motor includes a plurality of stator slots, the plurality of stator slots are arranged at intervals in a circumferential direction of the motor stator, each stator slot is configured to accommodate a plurality of flat wires, the plurality of flat wires in each stator slot are sequentially arranged in a layered manner in a radial direction of the motor stator, flat wires in the plurality of stator slots are arranged into a plurality of circles of flat wires in the radial direction of the motor stator, and each circle of flat wires includes a plurality of layers of flat wires arranged in the radial direction of the motor stator.

Two groups of branch flat wires in each circle of flat wires are respectively configured to transmit different branches of a same-phase alternating current, and each group of branch flat wires is configured to transmit one branch of the same-phase alternating current.

Each group of branch flat wires includes a plurality of first groups of flat wires and a plurality of second groups of flat wires, each first group of flat wires includes two flat wires, the two flat wires of the first group of flat wires are arranged at a same layer of two adjacent stator slots in a one-to-one manner, each second group of flat wires includes one flat wire, and the one flat wire of each second group of flat wires in one layer of flat wires in each circle of flat wires and one of flat wires of one first group of flat wires in another layer of flat wires are located in a same stator slot.

A plurality of first groups of flat wires and a plurality of second groups of flat wires of each group of branch flat wires in each layer of flat wires are alternately arranged in the circumferential direction of the motor stator, and two groups of branch flat wires configured to transmit a same-branch alternating current in two adjacent layers of flat wires are arranged in a staggered manner in the circumferential direction of the motor stator.

In the flat wire motor provided in this application, each group of branch flat wires of each phase winding in each circle of flat wires is arranged in a staggered manner in the circumferential direction of the motor stator, so that flat wires of two branches configured to transmit a same-phase alternating current are evenly distributed in a plurality of stator slots. This helps make wiring of the stator winding more orderly, helps reduce flat wire types of the stator winding, and helps make a structure of the stator winding symmetrical, thereby improving NVH performance of the flat wire motor.

In an implementation, one layer of flat wires in one of two adjacent circles of flat wires and one layer of flat wires in the other one of the two adjacent circles of flat wires are adjacently arranged in the radial direction of the motor stator, and two groups of branch flat wires configured to transmit a same-branch alternating current in the one layer of flat wires in the one circle of flat wires and the one layer of flat wires in the other one circle of flat wires are arranged in a staggered manner in the circumferential direction of the motor stator.

A number of stator slots in which the two groups of branch flat wires configured to transmit the same-branch alternating current in the one layer of flat wires in the one circle of flat wires and the one layer of flat wires in the other one circle of flat wires are staggered is greater than a number of stator slots in which two groups of branch flat wires configured to transmit a same-branch alternating current in each circle of flat wires are staggered in the circumferential direction of the motor stator.

The two groups of branch flat wires configured to transmit the same-branch alternating current in the two adjacent circles of flat wires are disposed in a staggered manner in the circumferential direction of the motor stator, and the number of stator slots in which the flat wires are staggered is greater than the number of stator slots in which the two groups of branch flat wires configured to transmit the same-branch alternating current in each circle of flat wires are staggered in the circumferential direction of the motor stator. This facilitates symmetrical arrangement of two branches of each phase winding, to improve NVH performance of the flat wire motor.

In an implementation, a sum of the number of stator slots in which the two groups of branch flat wires configured to transmit the same-branch alternating current in the one layer of flat wires in the one circle of flat wires and the one layer of flat wires in the other one circle of flat wires are staggered and the number of stator slots in which the two groups of branch flat wires configured to transmit the same-branch alternating current in each circle of flat wires are staggered in the circumferential direction of the motor stator is half of a number of the plurality of stator slots. In this way, two branches of flat wires of each phase winding are evenly distributed at each layer, so that the two branches of each phase winding are symmetrically arranged, to improve NVH performance of the flat wire motor.

In an implementation, two groups of branch flat wires in each layer of flat wires are sequentially arranged in the circumferential direction of the motor stator, and the two groups of branch flat wires in each layer of flat wires have a same number of flat wires.

The two groups of branch flat wires in each layer of flat wires have the same number. This facilitates structure symmetry of the stator winding and avoids a circulating current between branches, thereby reducing harmonic content and improving NVH performance of the flat wire motor.

In an implementation, a difference between a number of stator slots in which two groups of branch flat wires configured to transmit a same-branch alternating current in two adjacent layers of flat wires in each circle of flat wires and a number of stator slots between a first group of flat wires and a second group of flat wires that are adjacent in the circumferential direction of the motor stator in each layer of flat wires is 1. In this way, there is a same number of stator slots between a first group of flat wires and a second group of flat wires that are adjacent in each branch of each phase winding in each layer of flat wires. This facilitates even distribution of a plurality of groups of flat wires of each phase winding in the stator winding in the circumferential direction of the motor stator, facilitates more orderly wiring of the stator winding, and facilitates structure symmetry of the stator winding, to improve NVH performance of the flat wire motor.

In an implementation, one first group of flat wires in one of two adjacent circles of flat wires is connected to one first group of flat wires in the other one of the two adjacent circles of flat wires through two connection segments with a same length, to reduce wire types of the stator winding and simplify a structure of the stator winding.

In an implementation, each first group of flat wires in one of two adjacent layers of flat wires in each circle of flat wires is connected to one first group of flat wires in the other one of the two adjacent layers of flat wires through two connection segments with a same length, the two connection segments for connecting the two first groups of flat wires in the two adjacent circles of flat wires are located at one axial end of the motor stator, and the two connection segments for connecting the two first groups of flat wires in the same circle of flat wires are located at the other axial end of the motor stator.

According to the flat wire motor in this application, this facilitates more orderly wiring of the stator winding, facilitates structure symmetry of the stator winding, and avoids a circulating current between branches, thereby improving NVH performance of the flat wire motor. In addition, this helps reduce wire types of the stator winding, and simplify a structure of the stator winding or the flat wire motor, to simplify processing and assembly processes, and reduce manufacturing costs and assembly costs.

In an implementation, a difference between a number of stator slots crossed by the two connection segments for connecting the two first groups of flat wires in the two adjacent circles of flat wires and a number of stator slots crossed by the two connection segments for connecting the two first groups of flat wires in the same circle of flat wires is 1. A connection segment for connecting two flat wires in a same circle and a connection segment for connecting two adjacent circles of flat wires have different spans. This helps form a short-pitch winding, thereby reducing a harmonic winding factor and improving NVH performance of the flat wire motor.

In an implementation, one second group of flat wires in one of two adjacent circles of flat wires is connected to one second group of flat wires in the other one of the two adjacent circles of flat wires through one connection segment.

The two connection segments for connecting the two first groups of flat wires in the two adjacent circles of flat wires and the connection segment for connecting the two second groups of flat wires in the two adjacent circles of flat wires are located at a same axial end of the motor stator, and a number of stator slots crossed by the two connection segments for connecting the two first groups of flat wires in the two adjacent circles of flat wires is the same as a number of stator slots crossed by the connection segment for connecting the two second groups of flat wires in the two adjacent circles of flat wires. This helps reduce wire types of the stator winding, and simplify a structure of the stator winding or the flat wire motor, to simplify processing and assembly processes, and reduce manufacturing costs and assembly costs.

In an implementation, each second group of flat wires in one of two adjacent layers of flat wires in each circle of flat wires is connected to one second group of flat wires in the other one of the two adjacent layers of flat wires through one connection segment.

The connection segment for connecting the two second groups of flat wires in the two adjacent circles of flat wires is located at one axial end of the motor stator, and the connection segment for connecting the two second groups of flat wires in the same circle of flat wires is located at the other axial end of the motor stator.

In the flat wire motor in this application, a connection segment for connecting two second groups of flat wires in each circle of flat wires and a connection segment for connecting two second groups of flat wires in two adjacent circles of flat wires are located at different axial ends of the motor stator. This ensures symmetry of branch windings, fully utilizes space of the motor stator, and facilitates miniaturization and lightweighting of the flat wire motor.

In an implementation, a difference between a number of stator slots crossed by the connection segment for connecting the two second groups of flat wires in the two adjacent circles of flat wires and a number of stator slots crossed by the connection segment for connecting the two second groups of flat wires in the same circle of flat wires is 1.

Through the two connection segments with different lengths, connections between flat wires have different spans. This helps form a short-pitch winding, thereby reducing a harmonic winding factor and improving NVH performance of the flat wire motor.

In an implementation, the plurality of layers of flat wires include a first layer of flat wires, a distance between the first layer of flat wires and a central axis of the motor stator is less than a distance between another layer of flat wires and the central axis of the motor stator, and one of flat wires of one first group of flat wires in the first layer of flat wires is connected to one second group of flat wires in the first layer of flat wires through one connection segment.

In the flat wire motor of this application, a first layer of flat wires of each phase winding is closer to the motor stator than another layer of flat wires. One of flat wires of one first group of flat wires in the first layer of flat wires is connected to one second group of flat wires in the first layer of flat wires through a connection segment, and the connection segment is a same-layer connection segment.

Lead-out wires of phase windings are located at a same flat wire layer, so that star points of the phases are located at a same layer, radial space of the motor stator is fully utilized, and the star points of the phases are close to each other. This helps simplify a busbar structure, reduces an end portion length of the stator winding, and facilitates miniaturization and lightweighting of the flat wire motor.

In an implementation, the plurality of layers of flat wires include a second layer of flat wires, a distance between the second layer of flat wires and the central axis of the motor stator is greater than a distance between another layer of flat wires and the central axis of the motor stator, and one of flat wires of one first group of flat wires in the second layer of flat wires is connected to one second group of flat wires in the second layer of flat wires through one connection segment.

A difference between a number of stator slots crossed by the connection segment for connecting the first group of flat wires and the second group of flat wires in the second layer of flat wires and a number of stator slots crossed by the connection segment for connecting the first group of flat wires and the second group of flat wires in the first layer of flat wires is 1.

Through the two same-layer connection segments with different lengths, connections between flat wires have different spans. This helps form a short-pitch winding, thereby reducing a harmonic winding factor and improving NVH performance of the flat wire motor.

According to a second aspect of this application, a powertrain is provided. The powertrain includes a reducer and the foregoing flat wire motor, and the flat wire motor is in transmission connection to the reducer.

The flat wire motor is configured to convert electric energy into rotating mechanical energy, and output torque to the reducer. The reducer is configured to reduce a rotational speed, increase the torque, and transfer power to a transmission mechanism, to transfer the power to the wheels, so as to drive the wheels to rotate.

In addition, the powertrain provided in this application includes the foregoing flat wire motor. Therefore, the powertrain provided in this application and the flat wire motor in the foregoing technical solution resolve the same technical problem, and have the same technical effects. Details are not described herein again.

According to a third aspect of this application, a vehicle is provided. The vehicle includes wheels and the foregoing powertrain, and the powertrain is configured to drive the wheels.

The powertrain is configured to convert electric energy into mechanical energy and drive the wheels to rotate, so that the vehicle travels. In addition, the powertrain provided in this application includes the foregoing powertrain. Therefore, the vehicle provided in this application and the powertrain in the foregoing technical solution resolve the same technical problem, and have the same technical effects. Details are not described herein again.

### BRIEF DESCRIPTION OF DRAWINGS

FIG. 1 is a diagram of a structure of a vehicle according to an embodiment of this application;
FIG. 2 is a diagram of a structure of a powertrain according to an embodiment of this application;
FIG. 3 is a partial exploded view of a flat wire motor according to an embodiment of this application;
FIG. 4 is a diagram of a partial structure of a motor stator according to an embodiment of this application;
FIG. 5 is a diagram 1 of an end portion connection of a three-phase winding according to an embodiment of this application;
FIG. 6 is a diagram 2 of an end portion connection of a three-phase winding according to an embodiment of this application;
FIG. 7 is a diagram 1 of a phase spread distribution structure of a three-phase winding according to an embodiment of this application;
FIG. 7A is a diagram of a partial structure of the area A1 in FIG. 7;
FIG. 7B is a diagram of a partial structure of the area A2 in FIG. 7;
FIG. 8 is a diagram 2 of a phase spread distribution structure of a three-phase winding according to an embodiment of this application;
FIG. 8A is a diagram of a partial structure of the area A3 in FIG. 8;
FIG. 8B is a diagram of a partial structure of the area A4 in FIG. 8;
FIG. 9 is a connection diagram 1 of a first U-phase branch of the U-phase winding in FIG. 7;
FIG. 9A is a partial enlarged view of the area A5 in FIG. 9;
FIG. 9B is a partial enlarged view of the area A6 in FIG. 9;
FIG. 10 is a connection diagram 1 of a second U-phase branch of the U-phase winding in FIG. 7;
FIG. 10A is a partial enlarged view of the area A7 in FIG. 10;
FIG. 10B is a partial enlarged view of the area A8 in FIG. 10;
FIG. 11 is a connection diagram 2 of a first U-phase branch of the U-phase winding in FIG. 7;
FIG. 11A is a partial enlarged view of the area A9 in FIG. 11;
FIG. 11B is a partial enlarged view of the area A10 in FIG. 11;
FIG. 12 is a connection diagram 2 of a second U-phase branch of the U-phase winding in FIG. 7;
FIG. 12A is a partial enlarged view of the area A11 in FIG. 12;
FIG. 12B is a partial enlarged view of the area A12 in FIG. 12;
FIG. 13 is a connection diagram 1 of a first U-phase branch of the U-phase winding in FIG. 8;
FIG. 13A is a partial enlarged view of the area A13 in FIG. 13;
FIG. 13B is a partial enlarged view of the area A14 in FIG. 13;
FIG. 14 is a connection diagram 2 of a first U-phase branch of the U-phase winding in FIG. 8;
FIG. 14A is a partial enlarged view of the area A15 in FIG. 14;
FIG. 14B is a partial enlarged view of the area A16 in FIG. 14;
FIG. 15 is a connection diagram 1 of a second U-phase branch of the U-phase winding in FIG. 8;
FIG. 15A is a partial enlarged view of the area A17 in FIG. 15;
FIG. 15B is a partial enlarged view of the area A18 in FIG. 15;
FIG. 16 is a connection diagram 2 of a second U-phase branch of the U-phase winding in FIG. 8;
FIG. 16A is a partial enlarged view of the area A19 in FIG. 16; and
FIG. 16B is a partial enlarged view of the area A20 in FIG. 16.

### Reference numerals:

1000: vehicle; 100: powertrain; 200: wheel; 300: transmission mechanism; 10: flat wire motor; 20: reducer; 101: motor stator; 102: motor rotor;
1: stator core; 11: stator slot; 111: slot opening; 12: mounting shaft hole;
2: stator winding;
21: flat wire; 22: first branch flat wire; 221: first branch flat wire a; 222: first branch flat wire b; 223: first branch flat wire c;
23: second branch flat wire; 231: second branch flat wire a; 232: second branch flat wire b; 233: second branch flat wire c;
001: L1^{th} layer of flat wires; 002: L2^{th} layer of flat wires; 003: L3^{th} layer of flat wires; 004: L4^{th} layer of flat wires; 005: L5^{th} layer of flat wires; 006: L6^{th} layer of flat wires; 007: L7^{th} layer of flat wires; 008: L8^{th} layer of flat wires;
01: first group of flat wires; 011: first group of flat wires a; 012: first group of flat wires b;
02: second group of flat wires; 021: second group of flat wires a; 022: second group of flat wires b;
31: first circle of flat wires; 32: second circle of flat wires; 33: third circle of flat wires; 34: fourth circle of flat wires;
4: connection segment; 411: first cross-wire segment; 412: second cross-wire segment; 413: third cross-wire segment; 414: second cross-wire segment; 415: fifth cross-wire segment; 416: sixth cross-wire segment;
421: first welding segment; 422: second welding segment; 423: third welding segment; 424: fourth welding segment; 425: fifth welding segment; 426: sixth welding segment;
5: same-layer connection segment; 51: first same-layer cross-wire segment; 52: second same-layer cross-wire segment; 53: third same-layer cross-wire segment; 54: fourth same-layer cross-wire segment;
55: first same-layer welding segment; 56: second same-layer welding segment; 57: third same-layer welding segment; 58: fourth same-layer welding segment; and
71: lead-in wire; 711: first branch lead-in wire; 712: second branch lead-in wire; 72: lead-out wire; 721: first branch lead-out wire; 722: second branch lead-out wire.

### DESCRIPTION OF EMBODIMENTS

The following describes the technical solutions in embodiments of this application with reference to the accompanying drawings in embodiments of this application. It is clear that the described embodiments are merely some embodiments of this application.

In the accompanying drawings of embodiments of this application, entity structures such as components and assemblies are represented by using guide lines, and hollow-out structures such as openings, holes, space, and cavities are represented by using guide lines with arrows.

For ease of understanding, English abbreviations and technical terms used in embodiments of this application are first explained and described below.

NVH: noise, vibration, and harshness.

Motor stator: is a stationary part of a motor, and is configured to generate a rotating magnetic field.

Motor rotor: is a rotating component in a motor, and is configured to implement conversion between electric energy and mechanical energy.

Number of phases: is a number of phases of an alternating current power supply that independently supplies power in a stator winding.

Number of poles: is a number of magnetic poles of a motor. The magnetic poles are classified into N poles and S poles. One N pole and one S pole are referred to as a pair of magnetic poles. When the number of pole pairs of the motor is 1, 2, 3, and 4, the corresponding number of poles is 2, 4, 6, and 8.

Number of slots per pole per phase: is a number of stator slots occupied by each phase winding with respect to each magnetic pole, and is represented by q. $q = \frac{Z}{2 pm}$, where Z is a total number of stator slots, P is a number of magnetic pole pairs, p is a positive integer, and m is a number of phases.

Integral slot winding: means that a number q of slots per pole per phase in a stator winding is an integer.

Fractional slot winding: means that a number q of slots per pole per phase in a stator winding is a fraction.

Pole pitch: is a distance occupied by each magnetic pole on a circumferential surface. In an alternating current motor, the pole pitch is a slot pitch occupied by each magnetic pole along an inner circle of a stator core, and is represented by a number of stator slots. The pole pitch is represented by f, and $f = \frac{Z}{2 p}$, where Z is a total number of stator slots, and P is a number of magnetic pole pairs.

Pitch: is also referred to as a span of a flat wire, and refers to a number of stator slots occupied by two active sides of a single flat wire. Using pitch y=6 as an example, the pitch being 6 means that the two active sides of the flat wire are separated by six slots, and the two active sides are respectively embedded in a 1^{st} slot and a 7^{th} slot.

Slot pitch angle: is a mechanical angle between two adjacent stator slots on a stator core.

Slot electrical angle: is an electrical angle between two adjacent stator slots on a stator core.

Full-pitch winding: A pitch of a flat wire in a stator winding is equal to a pole pitch, that is, a number of stator slots crossed by two active sides of the flat wire is equal to a number of slots occupied by one magnetic pole.

Short-pitch winding: A pitch of a flat wire in a stator winding is less than a pole pitch, that is, a number of stator slots crossed by two active sides of the flat wire is less than a number of slots occupied by one magnetic pole.

Busbar: is a connection bar located at an end portion of a stator winding and configured to connect a neutral line, a lead, a jumper wire, and the like at the end portion of the stator winding. In some embodiments, the busbar is an integrated injection-molding mechanical part, and is referred to as an integrated injection-molding busbar. Compared with a conventional wiring method, the busbar has significant advantages such as a convenient design, low impedance, a strong anti-interference capability, high reliability, high space utilization, and quick assembly.

Upin hairpin wire: means that a flat wire is preformed into a hairpin shape, that is, a shape of the letter "U". The Upin hairpin wire is inserted into a stator slot in an axial direction of a motor stator. After processes such as twisting and welding, Upin hairpin wires independent of each other are connected to form a stator winding.

Ipin hairpin wire: has a shape of the letter "I". The wire is directly inserted, and then double-sided welding is performed.

Crown end: In an axial direction of a motor stator, an end of a stator winding without a solder joint is like a crown. The end of the stator winding without a solder joint is referred to as the crown end.

Welding end: In an axial direction of a motor stator, an end that is of a stator winding and that is away from a crown end connects, through welding, Upin hairpin wires independent of each other. An end of the stator winding with a solder joint is referred to as the welding end.

Phase spread: indicates a number of stator slots consecutively occupied by a same-phase winding per pole.

Unit motor: indicates a minimum unit that represents slot electromotive force phase distribution information per pair of magnetic poles.

A flat wire motor is a motor that uses a flat rectangular wire as a stator winding. Compared with a conventional motor using a circular wire, the flat wire motor has a high copper filling rate and higher power density, efficiency, and heat dissipation performance, and is widely used in the field of new energy vehicles. In the new energy vehicle, an end portion length of a stator winding needs to be reduced. The end portion length of the stator winding is a dimension, in an axial direction of a motor stator, of an end portion that is of the stator winding and that is exposed to a stator core. Currently, a stator winding of the flat wire motor is usually a stator winding whose number q of slots per pole per phase is 1 or a stator winding whose number q of slots per pole per phase is 2. The stator winding whose number q of slots per pole per phase is 1 and the stator winding whose number q of slots per pole per phase is 2 each are an integral slot winding with a small number of poles. For the stator winding whose number q of slots per pole per phase is 2, because a number of magnetic poles is small, end portion arrangement of the stator winding has a requirement on space, it is difficult to further reduce an end portion length of the stator winding, and costs of the stator winding are high. Compared with the stator winding whose number q of slots per pole per phase is 2, the stator winding whose number q of slots per pole per phase is 1 has a reduced end portion length, but the stator winding whose number q of slots per pole per phase is 1 has high harmonic content and poor NVH performance. Therefore, in current flat wire motors, neither a flat wire motor whose number q of slots per pole per phase is 2 nor a flat wire motor whose number q of slots per pole per phase is 1 can meet a requirement for reducing an end portion length of a stator winding, reducing harmonic content, and improving NVH performance.

To resolve these problems, this application provides a flat wire motor, a powertrain, and a vehicle. A number q of slots per pole per phase of the flat wire motor is 1.5. In comparison with the stator winding whose number q of slots per pole per phase is 2, the number q of slots per pole per phase of a stator winding in the flat wire motor is set to 1.5, so that an end portion length of the stator winding is reduced, costs of the stator winding are reduced, and a weight of the stator winding is reduced. In comparison with the stator winding whose number q of slots per pole per phase is 1, the number q of slots per pole per phase of a stator winding in the flat wire motor is set to 1.5, so that winding distribution is more dispersed, and harmonic content of the winding is relatively low. This helps improve NVH performance of the flat wire motor.

The following describes technical solutions in embodiments of this application with reference to the accompanying drawings in embodiments of this application.

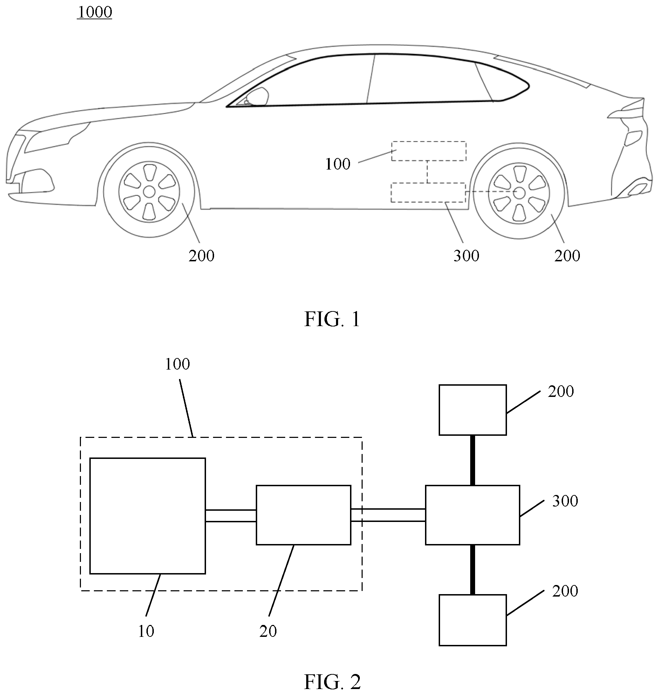

FIG. 1 is a diagram of a structure of a vehicle according to an embodiment of this application. Refer to FIG. 1. A vehicle 1000 includes wheels 200 and a powertrain 100. The powertrain 100 is configured to drive the vehicle 1000 to rotate, so that the vehicle 1000 travels.

Refer to FIG. 1. The vehicle 1000 further includes a transmission mechanism 300, and the transmission mechanism 300 is used for transmission connection between the powertrain 100 and the wheels 200. The powertrain 100 is configured to convert electric energy into mechanical energy, and drive, through the transmission mechanism 300, the wheels 200 to rotate, so that the vehicle 1000 travels.

In the embodiment shown in FIG. 1, the powertrain 100 is configured to drive rear wheels of the vehicle 1000 to rotate, and front wheels of the vehicle 1000 are configured to implement steering. The vehicle 1000 responds more sensitively during steering, and is more stable during turning.

In some other embodiments, the powertrain 100 is configured to drive the front wheels of the vehicle 1000 to rotate, and the front wheels are configured to implement driving and steering. The front-wheel driving manner has a simple structure, a small number of parts, and a lighter weight, so that a power loss is reduced, transmission efficiency is higher, and both fuel consumption and costs are relatively low.

FIG. 2 is a diagram of a structure of a powertrain according to an embodiment of this application. Refer to FIG. 2. A structure shown in a dashed-line box is the powertrain 100. The powertrain 100 includes a flat wire motor 10 and a reducer 20. The flat wire motor 10 is in transmission connection to the reducer 20. The flat wire motor 10 is configured to convert electric energy into rotating mechanical energy, and output torque to the reducer 20. The reducer 20 includes a gear set. The reducer 20 reduces a rotational speed and increases torque by using the gear set, and transfers power to the transmission mechanism 300, to transfer the power to the wheels 200, so as to drive the wheels 200 to rotate.

There are a plurality of forms of flat wire motors 10. In some embodiments, the flat wire motor 10 is a permanent magnet synchronous motor. In some embodiments, the flat wire motor 10 is an electrically excited synchronous motor. In some embodiments, the flat wire motor 10 is an asynchronous motor.

The flat wire motor 10 provided in embodiments of this application is not only used in a generator and a drive motor of the vehicle 1000, but also may be used in another field based on an actual requirement. In some embodiments, the flat wire motor 10 is used in an electric propulsion motor in the aerospace field. In some other embodiments, the flat wire motor 10 is used in a traction motor in the high-speed railway field. In some other embodiments, the flat wire motor 10 is used in an electric propulsion motor in the ship field.

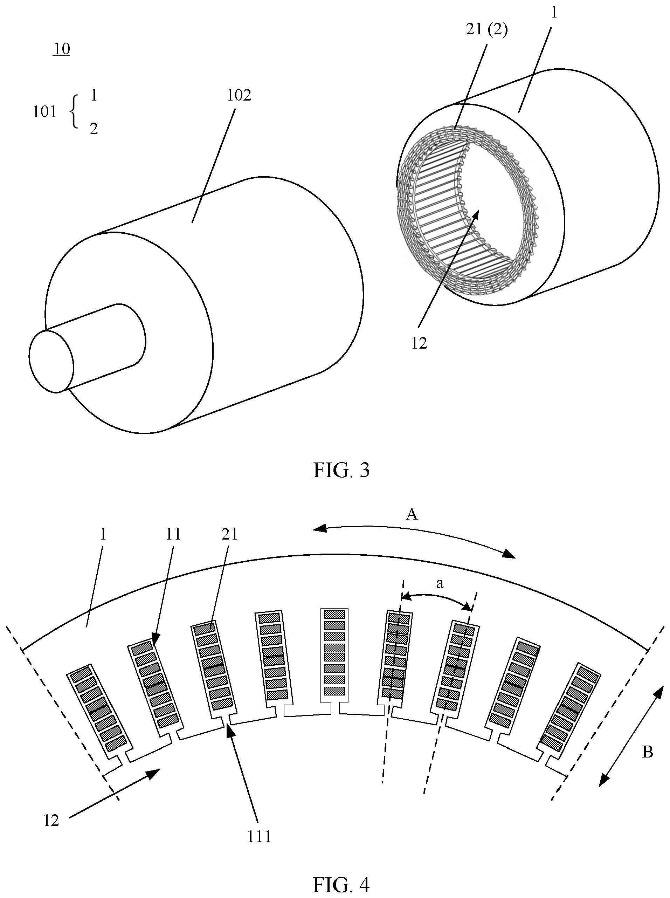

FIG. 3 is a partial exploded view of a flat wire motor according to an embodiment of this application. Refer to FIG. 3. The flat wire motor 10 includes a motor stator 101 and a motor rotor 102. The motor stator 101 and the motor rotor 102 operate cooperatively to implement conversion between electric energy and mechanical energy. The motor stator 101 includes a stator core 1 and a stator winding 2, and the stator winding 2 is mounted on the stator core 1.

After the stator winding 2 is powered on, a rotating magnetic field is generated, and the motor rotor 102 cuts the magnetic field to generate an induced current. The induced current interacts with the rotating magnetic field to form electromagnetic torque, and the motor rotor 102 is subject to a force and rotates under the action of the electromagnetic torque, thereby implementing conversion from electric energy to mechanical energy.

Refer to FIG. 3. The stator core 1 includes a mounting shaft hole 12, and the motor rotor 102 is mounted in the mounting shaft hole 12 of the stator core 1 in an axial direction of the motor stator 101.

FIG. 4 is a diagram of a partial structure of a motor stator according to an embodiment of this application. Refer to FIG. 4. The stator core 1 includes a plurality of stator slots 11. A total number Z of stator slots is a multiple of 9. In some embodiments, the total number Z of stator slots is 36. In some embodiments, the total number Z of stator slots is 72. A person skilled in the art selectively designs the number of stator slots 11 based on an actual requirement.

Refer to FIG. 4. The plurality of stator slots 11 are disposed at intervals in a circumferential direction of the stator core 1, each stator slot 11 extends in an axial direction of the stator core 1 and runs through the stator core 1, each stator slot 11 includes a slot opening 111, the slot opening 111 is provided on an inner wall of the stator core 1, and an opening orientation of the slot opening 111 is parallel to a radial direction of the stator core 1.

The circumferential direction of the stator core 1 is shown as a direction A on a surface of FIG. 4. The radial direction of the stator core 1 is shown as a direction B on the surface of FIG. 4. The axial direction of the stator core 1 is a direction perpendicular to the surface of FIG. 4. That the plurality of stator slots 11 are disposed at intervals in the circumferential direction of the stator core 1 means that there is a distance between two adjacent stator slots 11 in the circumferential direction of the stator core 1.

In some embodiments, the plurality of stator slots 11 are evenly disposed at intervals in the circumferential direction of the stator core 1, that is, there is a same distance between any two adjacent stator slots 11 in the circumferential direction of the stator core 1. Distances between the plurality of stator slots 11 are the same, so that there are a small number of magnetomotive force harmonics, and there is good magnetic field symmetry. In addition, a torque ripple is slight. This helps improve running stability of the flat wire motor, thereby improving NVH performance of flat wire motor.

In some other embodiments, distances between the plurality of stator slots 11 are not completely the same, so that a torque density of the motor is high, a fault tolerance capability of the motor is strong, and an impact range of a single-phase fault is small.

When a distance between two adjacent stator slots 11 is represented as a slot pitch angle, the slot pitch angle between the two adjacent stator slots 11 is $\frac{360 °}{Z} ,$, where Z is the total number of stator slots.

When a distance between two adjacent stator slots 11 is represented as a slot electrical angle, the slot electrical angle between the two adjacent stator slots 11 is $\frac{360 °}{Z} \times p$, where Z is the total number of stator slots, and P is a number of magnetic pole pairs.

Refer to FIG. 4. An angle a shows a slot pitch angle or a slot electrical angle between two adjacent stator slots 11. A center line of each stator slot 11 in a radial direction of the motor stator 101 intersects a central axis of the stator core 1. The slot pitch angle a between two adjacent stator slots 11 is an included angle between a center line of one of the two adjacent stator slots 11 in the radial direction of the motor stator and a center line of the other one of the two adjacent stator slots 11 in the radial direction of the motor stator 101.

In embodiments provided in this application, the circumferential direction of the stator core 1 and a circumferential direction of the motor stator 101 are a same direction. Therefore, the circumferential direction of the stator core 1 is also referred to as the circumferential direction of the motor stator 101.

Refer to FIG. 3 and FIG. 4. Each stator slot 11 is configured to accommodate a plurality of flat wires 21, and the plurality of flat wires 21 in each stator slot 11 are sequentially arranged in a layered manner in the radial direction of the motor stator 101. A plurality of flat wires 21 in the plurality of stator slots 11 are connected to form a stator winding 2.

In some embodiments, the flat wire 21 is also referred to as a conductor, and the flat wire 21 is a copper flat wire. The copper has good electrical conductivity, high strength, easy processing and molding, good thermal conductivity, and high stability. Using the copper flat wire in the flat wire motor improves efficiency of the flat wire motor and reduces electric energy loss and heat generation.

In some embodiments, 2N layers of flat wires are arranged in each stator slot 11, where N is greater than 2. In some embodiments, even-numbered layers of flat wires are four layers of flat wires. In some embodiments, even-numbered layers of flat wires are six layers of flat wires. In some other embodiments, even-numbered layers of flat wires are eight layers of flat wires. A person skilled in the art selectively designs a number of the 2N layers of flat wires in each stator slot 11 based on an actual requirement.

In this application, a number of phases of the flat wire motor 10 is m, where m is a natural number, and m is greater than 1. In some embodiments, m is 2, that is, the flat wire motor 10 is a two-phase motor, and the flat wire motor 10 is powered by a two-phase alternating current power supply. In some embodiments, m is 3, that is, the flat wire motor 10 is a three-phase motor, and the flat wire motor 10 is powered by a three-phase alternating current power supply. In some embodiments, m is greater than 3, that is, the flat wire motor 10 is a motor with more than three phases. A person skilled in the art selectively designs the number of phases of the flat wire motor 10 based on an actual requirement.

For example, the flat wire motor 10 is a three-phase motor. A plurality of flat wires 21 in all stator slots 11 of the motor stator 101 are connected by group to form a three-phase winding. The three-phase winding includes a U-phase winding, a V-phase winding, and a W-phase winding. Each phase winding in the three-phase winding may include a plurality of phase units. During connection, phase units of a first-phase winding, phase units of a second-phase winding, and phase units of a third-phase winding are sequentially and periodically arranged along the inner wall of the stator core. Each phase unit of each phase winding is a pole phase, and a number of winding slots corresponding to each phase unit is a number of slots per pole per phase.

In embodiments of this application, each phase winding is a two-branch winding.

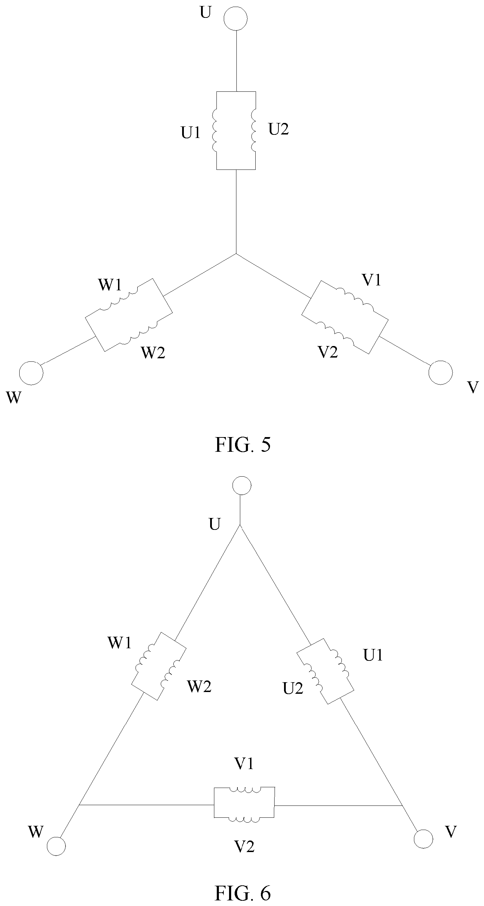

FIG. 5 is a diagram 1 of an end portion connection of a three-phase winding according to an embodiment of this application. Refer to FIG. 5. The letter U represents the U-phase winding. The letter V represents the V-phase winding. The letter W represents the W-phase winding. A lead-out wire of the U-phase winding, a lead-out wire of the V-phase winding, and a lead-out wire of the W-phase winding are connected in a Y-shaped manner.

Refer to FIG. 5. In the three-phase winding, the U-phase winding, the V-phase winding, and the W-phase winding each are a two-branch winding. The letter U1 represents a first U-phase branch of the U-phase winding, and the letter V2 represents a second U-phase branch of the U-phase winding. The letter V1 represents a first V-phase branch of the V-phase winding. The letter V2 represents a second V-phase branch of the V-phase winding. The letter W1 represents a first W-phase branch of the W-phase winding. The letter W2 represents a second W-phase branch of the W-phase winding. The first U-phase branch and the second U-phase branch of the U-phase winding are connected in parallel to form the U-phase winding. The first V-phase branch and the second V-phase branch of the V-phase winding are connected in parallel to form the V-phase winding. The first W-phase branch and the second W-phase branch of the W-phase winding are connected in parallel to form the W-phase winding.

The lead-out wire of the U-phase winding is a lead-out wire obtained after the first U-phase branch and the second U-phase branch of the U-phase winding are connected in parallel. The lead-out wire of the V-phase winding is a lead-out wire obtained after the first V-phase branch and the second V-phase branch of the V-phase winding are connected in parallel. The lead-out wire of the W-phase winding is a lead-out wire obtained after the first W-phase branch and the second W-phase branch of the W-phase winding are connected in parallel.

FIG. 6 is a diagram 2 of an end portion connection of a two-branch three-phase winding according to an embodiment of this application. Refer to FIG. 6. The letter U represents the U-phase winding. The letter V represents the V-phase winding. The letter W represents the W-phase winding. A lead-out wire of the U-phase winding, a lead-out wire of the V-phase winding, and a lead-out wire of the W-phase winding are connected in a A-shaped manner.

Refer to FIG. 6. In the three-phase winding, the U-phase winding, the V-phase winding, and the W-phase winding each are a two-branch winding. The letter U1 represents a first U-phase branch of the U-phase winding, and the letter V2 represents a second U-phase branch of the U-phase winding. The letter V1 represents a first V-phase branch of the V-phase winding. The letter V2 represents a second V-phase branch of the V-phase winding. The letter W1 represents a first W-phase branch of the W-phase winding. The letter W2 represents a second W-phase branch of the W-phase winding. The first U-phase branch and the second U-phase branch of the U-phase winding are connected in parallel to form the U-phase winding. The first V-phase branch and the second V-phase branch of the V-phase winding are connected in parallel to form the V-phase winding. The first W-phase branch and the second W-phase branch of the W-phase winding are connected in parallel to form the W-phase winding.

The lead-out wire of the U-phase winding is a lead-out wire obtained after the first U-phase branch and the second U-phase branch of the U-phase winding are connected in parallel. The lead-out wire of the V-phase winding is a lead-out wire obtained after the first V-phase branch and the second V-phase branch of the V-phase winding are connected in parallel. The lead-out wire of the W-phase winding is a lead-out wire obtained after the first W-phase branch and the second W-phase branch of the W-phase winding are connected in parallel.

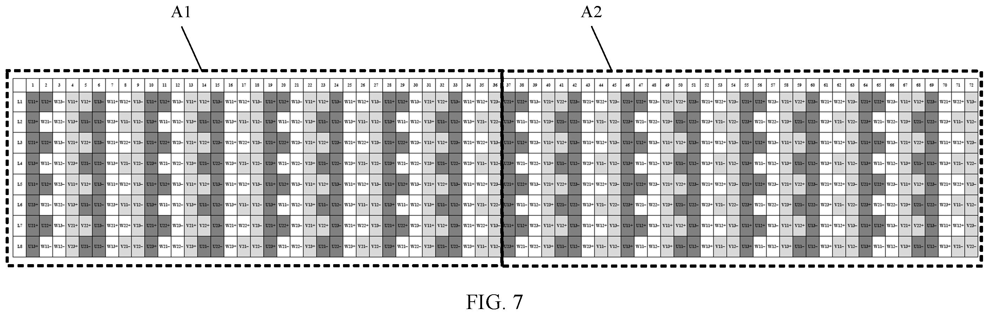

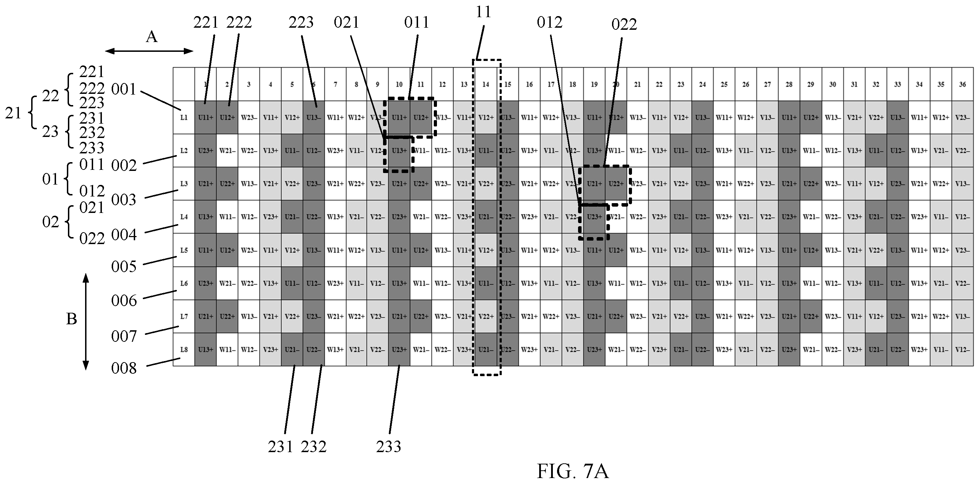

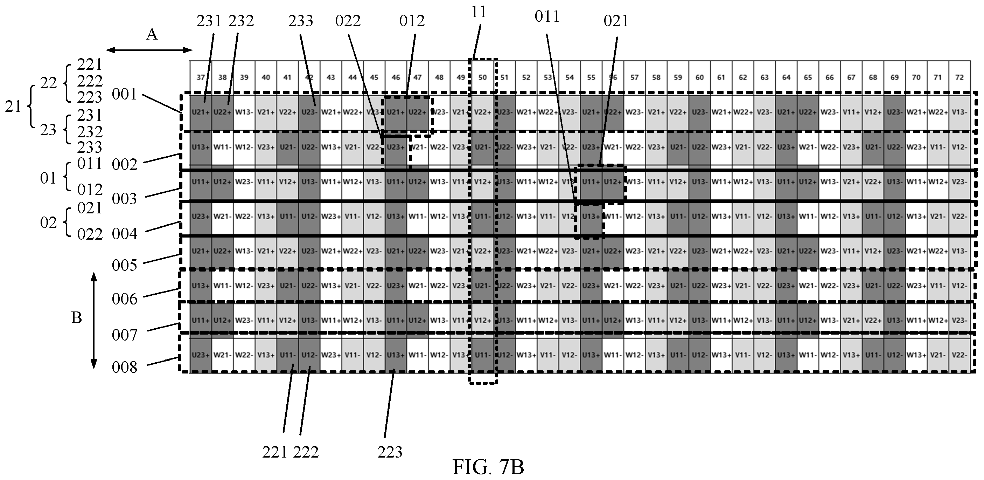

FIG. 7 is a diagram 1 of a phase spread distribution structure of a three-phase winding according to an embodiment of this application. FIG. 7A is a diagram of a partial structure of the area A1 in FIG. 7. FIG. 7B is a diagram of a partial structure of the area A2 in FIG. 7. Refer to FIG. 7, FIG. 7A, and FIG. 7B. The total number Z of stator slots is 72, and the 72 stator slots 11 are sequentially disposed in the direction A. The direction A is the circumferential direction of the motor stator. Numbers 1 to 72 shown in a first row in FIG. 7A and FIG. 7B represent sequence numbers of the stator slots 11, 1 represents a 1^{st} stator slot, 2 represents a 2^{nd} stator slot, and by analogy, 72 represents a 72^{nd} stator slot. The sequence numbers of the stator slots 11 are used to distinguish between the stator slots 11, and are not used to limit positions of the stator slots 11.

Eight layers of flat wires are accommodated in each stator slot 11, and the eight layers of flat wires are sequentially arranged in the direction B. The direction B is the radial direction of the motor stator.

In the flat wire motor, each phase winding includes a positive phase spread and a negative phase spread. The positive phase spread is a space area in which a winding current generates a positive magnetomotive force. The negative phase spread is a space area in which a winding current generates a reverse magnetomotive force. The positive phase spread and the negative phase spread of each phase winding are alternately arranged in the direction A, so that magnetomotive forces at three phases are different from each other by an electrical angle of 120° in space, to form a rotating magnetic field.

Refer to FIG. 7A and FIG. 7B. In the direction A, a positive phase spread of the U-phase winding (where a phase spread in which U+ is located is the positive phase spread of the U-phase winding), a negative phase spread of the W-phase winding (where a phase spread in which W- is located is the negative phase spread of the W-phase winding), a positive phase spread of the V-phase winding (where a phase spread in which V+ is located is the positive phase spread of the V-phase winding), a negative phase spread of the U-phase winding (where a phase spread in which U- is located is the negative phase spread of the U-phase winding), a positive phase spread of the W-phase winding (where a phase spread in which W+ is located is the positive phase spread of the W-phase winding), and a negative phase spread of the V-phase winding (where a phase spread in which V-is located is the negative phase spread of the V-phase winding) are sequentially disposed, to facilitate even distribution of flat wires 21 of the three-phase winding, facilitate more orderly wiring of the stator winding 2, facilitate structure symmetry of the stator winding 2, and avoid a circulating current between branches, thereby reducing harmonic content and improving NVH performance of the flat wire motor.

In a three-phase motor, a phase spread of the three-phase motor refers to an electrical angle range occupied by a three-phase winding per magnetic pole. In the embodiments shown in FIG. 7A and FIG. 7B, a 60° phase spread is used, that is, each phase occupies an electrical angle of 60° per pole, and three phases occupy 180° in total, which corresponds to an electrical angle range of one magnetic pole. In addition, in the embodiments shown in FIG. 7A and FIG. 7A, eight unit motors are shown. The stator slots 1 to 9, the stator slots 10 to 18, the stator slots 19 to 27, the stator slots 28 to 36, the stator slots 37 to 45, the stator slots 46 to 54, the stator slots 55 to 63, and the stator slots 64 to 72 each form one unit motor. Eight unit motors are arranged in the direction A. Each unit motor corresponds to one magnetic pole pair. Therefore, a number of pole pairs of the three-phase motor is 8, and a number of poles of a corresponding flat wire motor is 16.

In this embodiment, a number of slots per pole per phase of the flat wire motor is $q = \frac{Z}{2 pm} = \frac{72}{16 \times 3} = 1.5$, and the flat wire motor is a fractional slot winding whose number of slots per pole per phase is 1.5. In comparison with a stator winding whose number q of slots per pole per phase is 2, the number q of slots per pole per phase of a stator winding in the flat wire motor is set to 1.5, so that an end portion length of the stator winding is reduced, and costs of the stator winding are reduced. In comparison with a stator winding whose number q of slots per pole per phase is 1, the number q of slots per pole per phase of a stator winding in the flat wire motor is set to 1.5, so that a winding distribution effect is enhanced, a back electromotive force waveform is closer to that of a sine wave, harmonic content is reduced, an order of cogging torque of the stator winding is reduced, and an amplitude is reduced, thereby helping improve NVH performance of the flat wire motor.

In the flat wire motor in this application, a plurality of flat wires 21 of each phase winding include two groups of branch flat wires, the two groups of branch flat wires are configured to transmit different branches of a same-phase alternating current, and flat wires 21 of each group of branch flat wires are configured to transmit one branch of the same-phase alternating current.

Each group of branch flat wires includes a plurality of first groups of flat wires 01 and a plurality of second groups of flat wires 02, each first group of flat wires 01 includes two flat wires 21, the two flat wires 21 of the first group of flat wires 01 are arranged at a same layer of two adjacent stator slots 11 in a one-to-one manner, each second group of flat wires 02 includes one flat wire 21, and the one flat wire 21 of each second group of flat wires 02 in one layer of flat wires in each circle of flat wires and one of flat wires 21 of one first group of flat wires 01 in another layer of flat wires are located in a same stator slot 11.

A plurality of first groups of flat wires 01 and a plurality of second groups of flat wires 02 of each group of branch flat wires in each layer of flat wires are alternately arranged in the circumferential direction of the motor stator, and two groups of branch flat wires configured to transmit a same-branch alternating current in two adjacent layers of flat wires are arranged in a staggered manner in the circumferential direction of the motor stator.

Each group of branch flat wires of each phase winding in each circle of flat wires is arranged in a staggered manner in the circumferential direction of the motor stator, so that flat wires 21 of two branches configured to transmit a same-phase alternating current are evenly distributed in a plurality of stator slots 11. This helps make wiring of the stator winding 2 more orderly, helps reduce flat wire types of the stator winding 2, and helps make a structure of the stator winding 2 symmetrical, thereby improving NVH performance of the flat wire motor.

FIG. 7A is a diagram of a phase spread distribution structure of the three-phase winding in the 1^{st} stator slot to the 36^{th} stator slot. FIG. 7B is a diagram of a phase spread distribution structure of the three-phase winding in the 37^{th} stator slot to the 72^{nd} stator slot.

Refer to FIG. 7A and FIG. 7B. Using a U-phase winding as an example, the U-phase winding includes a first U-phase branch and a second U-phase branch. The first U-phase branch includes a plurality of first branch flat wires 22, and the second U-phase branch includes a plurality of second branch flat wires 23.

The plurality of first branch flat wires 22 include a plurality of first groups of flat wires a011 and a plurality of second groups of flat wires a021. The plurality of second branch flat wires 23 include a plurality of first groups of flat wires b012 and a plurality of second groups of flat wires b022. The first group of flat wires a011 and the first group of flat wires b012 each include two flat wires respectively located in adjacent stator slots 11, and the second group of flat wires a021 and the second group of flat wires b022 each include one flat wire.

In an L1^{th} layer of flat wires 001, a plurality of first groups of flat wires a011 and a plurality of second groups of flat wires a021 are alternately arranged in the stator slots 1 to 36 in the circumferential direction of the motor stator. A plurality of first groups of flat wires b012 and a plurality of second groups of flat wires b022 are alternately arranged in the stator slots 37 to 42 in the circumferential direction of the motor stator.

In an L2^{th} layer of flat wires 002, a plurality of first groups of flat wires a011 and a plurality of second groups of flat wires a021 are alternately arranged in the stator slots 5 to 40 in the circumferential direction of the motor stator. A plurality of first groups of flat wires b012 and a plurality of second groups of flat wires b022 are alternately arranged in the stator slots 41 to 4 in the circumferential direction of the motor stator.

In an L3^{th} layer of flat wires 003, a plurality of first groups of flat wires a011 and a plurality of second groups of flat wires a021 are alternately arranged in the stator slots 37 to 72 in the circumferential direction of the motor stator. A plurality of first groups of flat wires b012 and a plurality of second groups of flat wires b022 are alternately arranged in the stator slots 1 to 36 in the circumferential direction of the motor stator.

In an L4^{th} layer of flat wires 004, a plurality of first groups of flat wires a011 and a plurality of second groups of flat wires a021 are alternately arranged in the stator slots 41 to 4 in the circumferential direction of the motor stator. A plurality of first groups of flat wires b012 and a plurality of second groups of flat wires b022 are alternately arranged in the stator slots 5 to 40 in the circumferential direction of the motor stator.

In an L5^{th} layer of flat wires 005, a plurality of first groups of flat wires a011 and a plurality of second groups of flat wires a021 are alternately arranged in the stator slots 1 to 36 in the circumferential direction of the motor stator. A plurality of first groups of flat wires b012 and a plurality of second groups of flat wires b022 are alternately arranged in the stator slots 37 to 42 in the circumferential direction of the motor stator.

In an L6^{th} layer of flat wires 006, a plurality of first groups of flat wires a011 and a plurality of second groups of flat wires a021 are alternately arranged in the stator slots 5 to 40 in the circumferential direction of the motor stator. A plurality of first groups of flat wires b012 and a plurality of second groups of flat wires b022 are alternately arranged in the stator slots 41 to 4 in the circumferential direction of the motor stator.

In an L7^{th} layer of flat wires 007, a plurality of first groups of flat wires a011 and a plurality of second groups of flat wires a021 are alternately arranged in the stator slots 37 to 72 in the circumferential direction of the motor stator. A plurality of first groups of flat wires b012 and a plurality of second groups of flat wires b022 are alternately arranged in the stator slots 1 to 36 in the circumferential direction of the motor stator.

In an L8^{th} layer of flat wires 008, a plurality of first groups of flat wires a011 and a plurality of second groups of flat wires a021 are alternately arranged in the stator slots 41 to 4 in the circumferential direction of the motor stator. A plurality of first groups of flat wires b012 and a plurality of second groups of flat wires b022 are alternately arranged in the stator slots 5 to 40 in the circumferential direction of the motor stator.

The stator slots 5 to 40 are stator slots that start from the 5^{th} stator slot and that are between the 5^{th} stator slot and the 40^{th} stator slot in the direction A to the right. The stator slots 41 to 4 are stator slots that start from the 41^{st} stator slot and that are between the 41^{st} stator slot and the 4^{th} stator slot in the direction A to the right.

In the embodiments shown in FIG. 7A and FIG. 7B of this application, both a flat wire distribution manner of two branches of the W-phase winding and a flat wire distribution manner of two branches of the V-phase winding are the same as a flat wire distribution manner of two branches of the U-phase winding, and the flat wire distribution manner of the two branches of the W-phase winding and the flat wire distribution manner of the two branches of the V-phase winding may be obtained by translating the flat wire distribution manner of the two branches of the U-phase winding. Details are not described herein in this application.

In the phase spread division manner in FIG. 7, the flat wires 21 of the three-phase winding are evenly distributed in the plurality of stator slots 11. This facilitates more orderly wiring of the three-phase winding, facilitates symmetrical distribution of the three-phase winding in space, reduces a risk of a circulating current between branches caused by uneven distribution of the flat wires 21, and reduces harmonic content of the winding, thereby improving NVH performance of the flat wire motor 10.

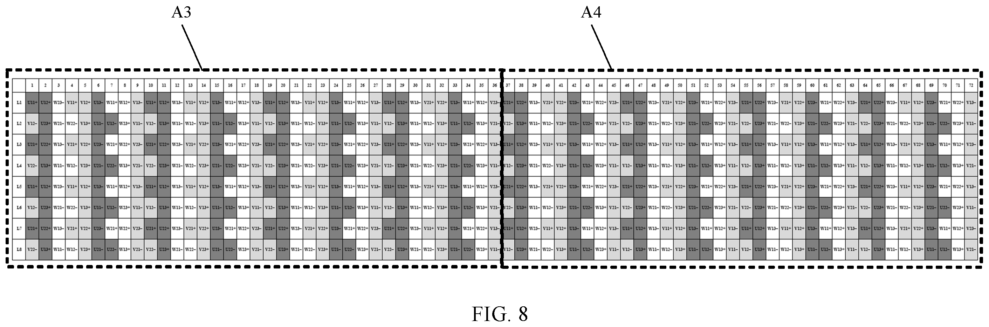

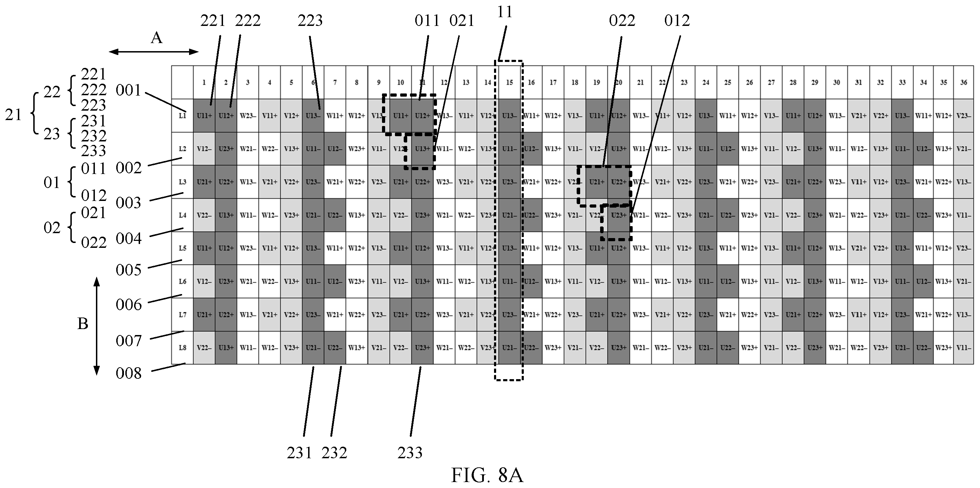

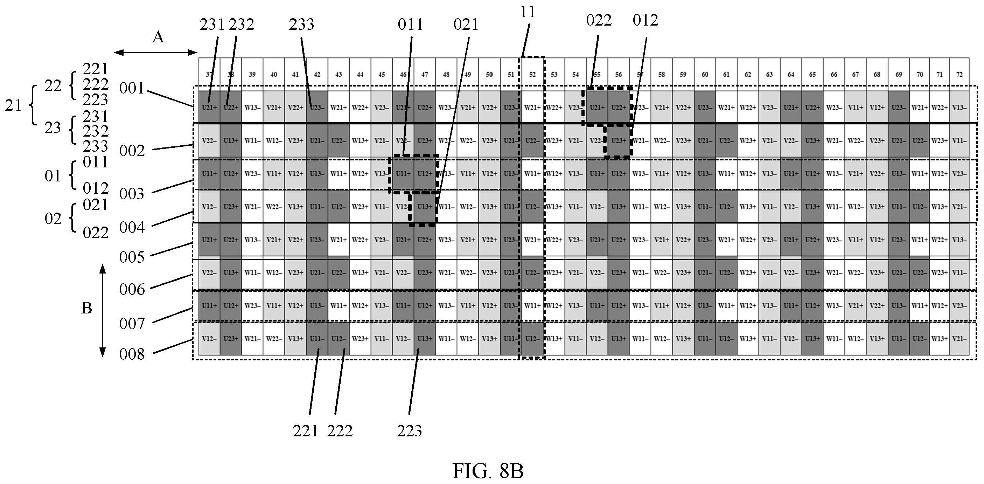

FIG. 8 is a diagram 2 of a phase spread distribution structure of a three-phase winding according to an embodiment of this application. FIG. 8A is a diagram of a partial structure of the area A3 in FIG. 8. FIG. 8B is a diagram of a partial structure of the area A3 in FIG. 8. FIG. 8 is a diagram of a phase spread distribution structure of a three-phase winding with 72 slots, 16 poles, and 8 layers. FIG. 8A is a diagram of a phase spread distribution structure of the three-phase winding in the 1^{st} stator slot to the 36^{th} stator slot. FIG. 8B is a diagram of a phase spread distribution structure of the three-phase winding in the 37^{th} stator slot to the 72^{nd} stator slot.

A difference from the embodiments shown in FIG. 7A and FIG. 7B lies in the following: Refer to FIG. 8A and FIG. 8B. The stator slots 72 to 8, the stator slots 9 to 17, the stator slots 18 to 26, the stator slots 27 to 35, the stator slots 36 to 44, the stator slots 45 to 53, the stator slots 54 to 62, and the stator slots 63 to 71 each form one unit motor.

Refer to FIG. 8A and FIG. 8B. Using a U-phase winding as an example, the U-phase winding includes a first U-phase branch and a second U-phase branch. The first U-phase branch includes a plurality of first branch flat wires 22, and the second U-phase branch includes a plurality of second branch flat wires 23.

The plurality of first branch flat wires 22 include a plurality of first groups of flat wires a011 and a plurality of second groups of flat wires a021. The plurality of second branch flat wires 23 include a plurality of first groups of flat wires b012 and a plurality of second groups of flat wires b022. The first group of flat wires a011 and the first group of flat wires b012 each include two flat wires 21 respectively located in adjacent stator slots 11, and the second group of flat wires a021 and the second group of flat wires b022 each include one flat wire 21.

In an L1^{th} layer of flat wires, a plurality of first groups of flat wires a011 and a plurality of second groups of flat wires a021 are alternately arranged in the stator slots 1 to 36 in the circumferential direction of the motor stator. A plurality of first groups of flat wires b012 and a plurality of second groups of flat wires b022 are alternately arranged in the stator slots 37 to 42 in the circumferential direction of the motor stator.

In an L2^{th} layer of flat wires, a plurality of first groups of flat wires a011 and a plurality of second groups of flat wires a021 are alternately arranged in the stator slots 5 to 40 in the circumferential direction of the motor stator. A plurality of first groups of flat wires b012 and a plurality of second groups of flat wires b022 are alternately arranged in the stator slots 41 to 4 in the circumferential direction of the motor stator.

In an L3^{th} layer of flat wires, a plurality of first groups of flat wires a011 and a plurality of second groups of flat wires a021 are alternately arranged in the stator slots 37 to 72 in the circumferential direction of the motor stator. A plurality of first groups of flat wires b012 and a plurality of second groups of flat wires b022 are alternately arranged in the stator slots 1 to 36 in the circumferential direction of the motor stator.

In an L4^{th} layer of flat wires, a plurality of first groups of flat wires a011 and a plurality of second groups of flat wires a021 are alternately arranged in the stator slots 41 to 4 in the circumferential direction of the motor stator. A plurality of first groups of flat wires b012 and a plurality of second groups of flat wires b022 are alternately arranged in the stator slots 5 to 40 in the circumferential direction of the motor stator.

In an L5^{th} layer of flat wires, a plurality of first groups of flat wires a011 and a plurality of second groups of flat wires a021 are alternately arranged in the stator slots 1 to 36 in the circumferential direction of the motor stator. A plurality of first groups of flat wires b012 and a plurality of second groups of flat wires b022 are alternately arranged in the stator slots 37 to 42 in the circumferential direction of the motor stator.

In an L6^{th} layer of flat wires, a plurality of first groups of flat wires a011 and a plurality of second groups of flat wires a021 are alternately arranged in the stator slots 5 to 40 in the circumferential direction of the motor stator. A plurality of first groups of flat wires b012 and a plurality of second groups of flat wires b022 are alternately arranged in the stator slots 41 to 4 in the circumferential direction of the motor stator.

In an L7^{th} layer of flat wires, a plurality of first groups of flat wires a011 and a plurality of second groups of flat wires a021 are alternately arranged in the stator slots 37 to 72 in the circumferential direction of the motor stator. A plurality of first groups of flat wires b012 and a plurality of second groups of flat wires b022 are alternately arranged in the stator slots 1 to 36 in the circumferential direction of the motor stator.

In an L8^{th} layer of flat wires, a plurality of first groups of flat wires a011 and a plurality of second groups of flat wires a021 are alternately arranged in the stator slots 41 to 4 in the circumferential direction of the motor stator. A plurality of first groups of flat wires b012 and a plurality of second groups of flat wires b022 are alternately arranged in the stator slots 5 to 40 in the circumferential direction of the motor stator.

In the embodiments shown in FIG. 8A and FIG. 8B of this application, both a flat wire distribution manner of two branches of the W-phase winding and a flat wire distribution manner of two branches of the V-phase winding are the same as a flat wire distribution manner of two branches of the U-phase winding, and the flat wire distribution manner of the two branches of the W-phase winding and the flat wire distribution manner of the two branches of the V-phase winding may be obtained by translating the flat wire distribution manner of the two branches of the U-phase winding. Details are not described herein in this application.

In some embodiments, two groups of branch flat wires in each layer of flat wires are sequentially arranged in the circumferential direction of the motor stator, and the two groups of branch flat wires in each layer of flat wires have a same number of flat wires. The two groups of branch flat wires in each layer of flat wires have the same number. This facilitates structure symmetry of the stator winding and avoids a circulating current between branches, thereby reducing harmonic content and improving NVH performance of the flat wire motor.

Refer to FIG. 7A, FIG. 7B, FIG. 8A, and FIG. 8B. A first group of flat wires 01 and a second group of flat wires 02 of each phase winding in each layer of flat wires are sequentially arranged in the circumferential direction of the motor stator, and each group of branch flat wires in each layer of flat wires has a same number of flat wires, that is, 12 flat wires. This facilitates three-phase symmetry and avoids a circulating current between branches, thereby reducing harmonic content and improving NVH performance of the flat wire motor.

In the phase spread division manner in FIG. 8, the flat wires 21 of the three-phase winding are evenly distributed in the plurality of stator slots 11. This facilitates more orderly wiring of the three-phase winding, facilitates symmetrical distribution of the three-phase winding in space, reduces a risk of a circulating current between branches caused by uneven distribution of the flat wires 21, and reduces harmonic content of the winding, thereby improving NVH performance of the flat wire motor 10.

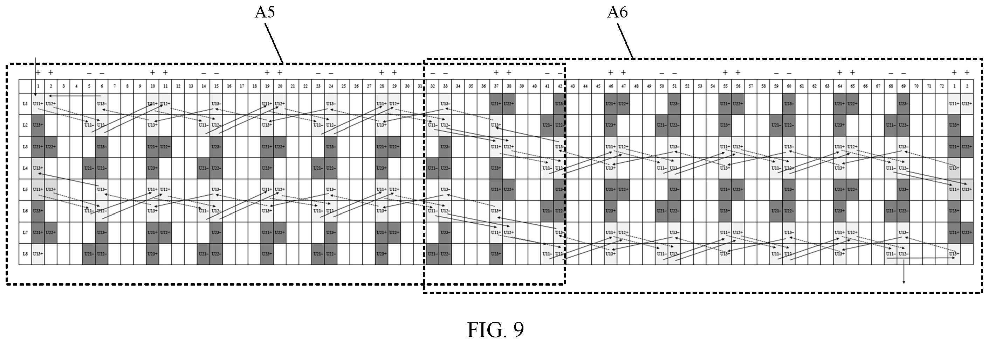

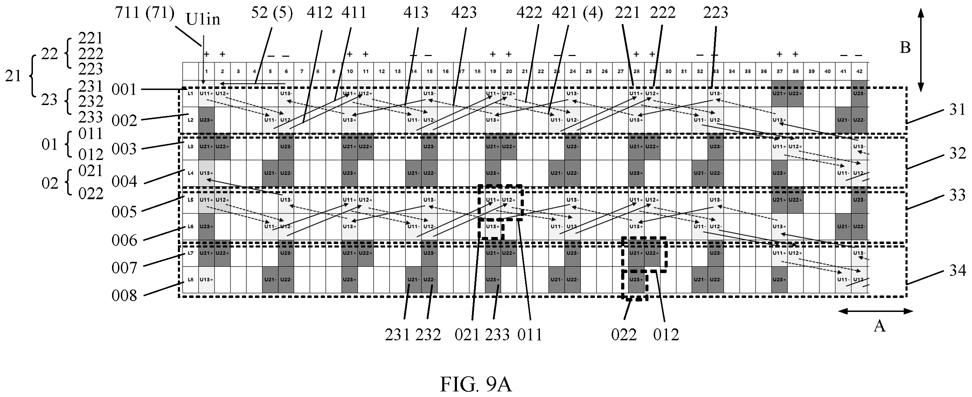

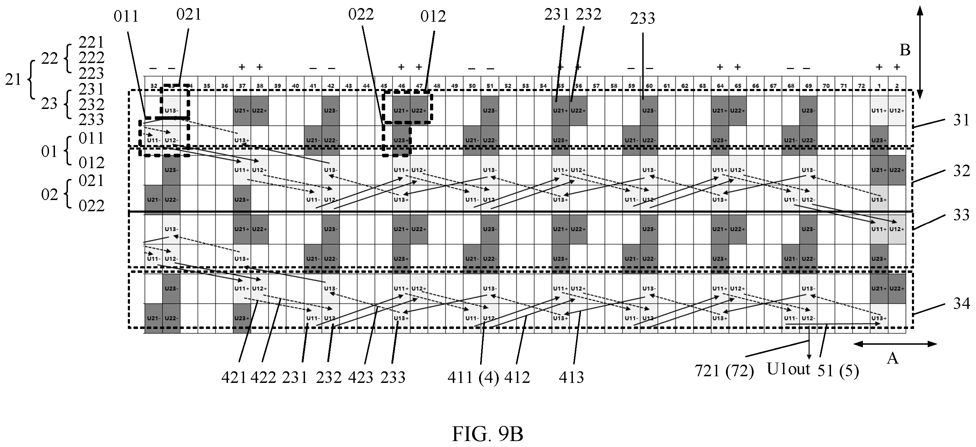

In this application, a number of phases of the flat wire motor 10 is m, a number q of slots per pole per phase of the flat wire motor 10 is 1.5, and there are L layers of flat wires in each stator slot 11. In FIG. 9 to FIG. 16, a solid line represents a wiring manner of a crown end or a cross-wire segment of the stator winding 2, and a dashed line represents a wiring manner of a welding end or a welding segment of the stator winding 2. U+ represents a positive phase spread of the U-phase winding, and U- represents a negative phase spread of the U-phase winding. There are three stator slots 11 between two adjacent phase spreads of the U-phase winding.

U11 represents a first branch flat wire a221, U12 represents a first branch flat wire b222, and U13 represents a first branch flat wire c223. The first branch flat wire a221, the first branch flat wire b222, and the first branch flat wire c223 are flat wires configured to transmit the first U-phase branch.

U21 represents a second branch flat wire a231, U22 represents a first branch flat wire b232, U23 represents a first branch flat wire c233, and the second branch flat wire a231, the first branch flat wire b232, and the first branch flat wire c233 are flat wires 21 configured to transmit the second U-phase branch.

In the flat wire motor provided in this application, the stator winding 2 includes a plurality of circles of flat wires 21, and the plurality of circles of flat wires of the stator winding 2 is half of a number of layers of flat wires in the stator slot 11.

The plurality of circles of flat wires of the stator winding 2 are sequentially arranged in the radial direction of the motor stator 101. The plurality of circles of flat wires include a first circle of flat wires 31 and a second circle of flat wires 32. A distance between the first circle of flat wires 31 and an axis of the motor stator 101 is greater than a distance between another circle of flat wires and the axis of the motor stator 101. A distance between the second circle of flat wires 32 and the axis of the motor stator 101 is less than a distance between another circle of flat wires and the axis of the motor stator 101.

The first circle of flat wires 31 is a circle of flat wires that is in the plurality of circles of flat wires and that is farthest away from the motor rotor 102. The second circle of flat wires 32 is a circle of flat wires that is in the plurality of circles of flat wires and that is closest to the motor rotor 102.

In some embodiments, refer to FIG. 9 to FIG. 16. One layer of flat wires in one of two adjacent circles of flat wires and one layer of flat wires in the other one of the two adjacent circles of flat wires are adjacently arranged in the radial direction of the motor stator, and two groups of branch flat wires configured to transmit a same-branch alternating current in the one layer of flat wires in the one circle of flat wires and the one layer of flat wires in the other one circle of flat wires are arranged in a staggered manner in the circumferential direction of the motor stator.

A number of stator slots in which the two groups of branch flat wires configured to transmit the same-branch alternating current in the one layer of flat wires in the one circle of flat wires and the one layer of flat wires in the other one circle of flat wires are staggered is greater than a number of stator slots in which two groups of branch flat wires configured to transmit a same-branch alternating current in each circle of flat wires are staggered in the circumferential direction of the motor stator.

The two groups of branch flat wires configured to transmit the same-branch alternating current in the two adjacent circles of flat wires are disposed in a staggered manner in the circumferential direction of the motor stator, and the number of stator slots in which the flat wires are staggered is greater than the number of stator slots in which the two groups of branch flat wires configured to transmit the same-branch alternating current in each circle of flat wires are staggered in the circumferential direction of the motor stator. This facilitates symmetrical arrangement of the first U-phase branch and the second U-phase branch, to improve NVH performance of the flat wire motor.

In some embodiments, refer to FIG. 9 to FIG. 16. A sum of the number of stator slots in which the two groups of branch flat wires configured to transmit the same-branch alternating current in the one layer of flat wires in the one circle of flat wires and the one layer of flat wires in the other one circle of flat wires are staggered and the number of stator slots in which the two groups of branch flat wires configured to transmit the same-branch alternating current in each circle of flat wires are staggered in the circumferential direction of the motor stator is half of a number of the plurality of stator slots. In this way, two branches of flat wires of each phase winding are evenly distributed at each layer, so that the two branches of each phase winding are symmetrically arranged, to improve NVH performance of the flat wire motor.

In some embodiments, refer to FIG. 9 to FIG. 16. A difference between a number of stator slots in which two groups of branch flat wires configured to transmit a same-branch alternating current in two adjacent layers of flat wires in each circle of flat wires and a number of stator slots between a first group of flat wires and a second group of flat wires that are adjacent in the circumferential direction of the motor stator in each layer of flat wires is 1. In this way, there is a same number of stator slots between a first group of flat wires and a second group of flat wires that are adjacent in each branch of each phase winding in each layer of flat wires. This facilitates even distribution of a plurality of groups of flat wires of each phase winding in the stator winding in the circumferential direction of the motor stator, facilitates more orderly wiring of the stator winding, and facilitates structure symmetry of the stator winding, to improve NVH performance of the flat wire motor.

In some embodiments, refer to FIG. 9 to FIG. 16. One first group of flat wires in one of two adjacent circles of flat wires is connected to one first group of flat wires in the other one of the two adjacent circles of flat wires through two connection segments with a same length, to reduce wire types of the stator winding and simplify a structure of the stator winding.

In some embodiments, refer to FIG. 9 to FIG. 16. Each first group of flat wires in one of two adjacent layers of flat wires in each circle of flat wires is connected to one first group of flat wires in the other one of the two adjacent layers of flat wires through two connection segments with a same length. This facilitates more orderly wiring of the stator winding, facilitates structure symmetry of the stator winding, and avoids a circulating current between branches, thereby improving NVH performance of the flat wire motor. In addition, this helps reduce wire types of the stator winding, and simplify a structure of the stator winding or the flat wire motor, to simplify processing and assembly processes, and reduce manufacturing costs and assembly costs.

In some embodiments, refer to FIG. 9 to FIG. 16. A difference between a number of stator slots crossed by the two connection segments for connecting the two first groups of flat wires in the two adjacent circles of flat wires and a number of stator slots crossed by the two connection segments for connecting the two first groups of flat wires in the same circle of flat wires is 1. A connection segment for connecting two flat wires in a same circle and a connection segment for connecting two adjacent circles of flat wires have different spans. This helps form a short-pitch winding, thereby reducing a harmonic winding factor and improving NVH performance of the flat wire motor.

In some embodiments, refer to FIG. 9 to FIG. 16. A number of stator slots crossed by the two connection segments for connecting the two first groups of flat wires in the two adjacent circles of flat wires is the same as a number of stator slots crossed by a connection segment for connecting two second groups of flat wires in the two adjacent circles of flat wires. This helps reduce wire types of the stator winding, and simplify a structure of the stator winding or the flat wire motor, to simplify processing and assembly processes, and reduce manufacturing costs and assembly costs.

In some embodiments, refer to FIG. 9 to FIG. 16. The two connection segments for connecting the two first groups of flat wires in the two adjacent circles of flat wires and the connection segment for connecting the two second groups of flat wires in the two adjacent circles of flat wires are located at a same axial end of the motor stator, and are located at a crown end or a welding end.

A number of stator slots crossed by the two connection segments for connecting the two first groups of flat wires in the two adjacent circles of flat wires is the same as a number of stator slots crossed by a connection segment for connecting two second groups of flat wires in the two adjacent circles of flat wires. This helps reduce wire types of the stator winding, and simplify a structure of the stator winding or the flat wire motor, to simplify processing and assembly processes, and reduce manufacturing costs and assembly costs.

In some embodiments, refer to FIG. 9 to FIG. 16. Each second group of flat wires in one of two adjacent layers of flat wires in each circle of flat wires is connected to one second group of flat wires in the other one of the two adjacent layers of flat wires through one connection segment, the connection segment for connecting the two second groups of flat wires in the two adjacent circles of flat wires is located at one axial end of the motor stator, and the connection segment for connecting the two second groups of flat wires in the same circle of flat wires is located at the other axial end of the motor stator.

In the flat wire motor in this application, a connection segment for connecting two second groups of flat wires 02 in each circle of flat wires and a connection segment for connecting two second groups of flat wires 02 in two adjacent circles of flat wires 21 are located at different axial ends of the motor stator. This ensures symmetry of branch windings, fully utilizes space of the motor stator 101, and facilitates miniaturization and lightweighting of the flat wire motor.

In some embodiments, refer to FIG. 9 to FIG. 16. A difference between a number of stator slots crossed by the connection segment for connecting the two second groups of flat wires in the two adjacent circles of flat wires and a number of stator slots crossed by the connection segment for connecting the two second groups of flat wires in the same circle of flat wires is 1.

Through the two connection segments with different lengths, connections between flat wires have different spans. This helps form a short-pitch winding, thereby reducing a harmonic winding factor and improving NVH performance of the flat wire motor.

In an implementation, refer to FIG. 9 to FIG. 16. A first layer of flat wires is the L8^{th} layer of flat wires, and one of flat wires of one first group of flat wires in the first layer of flat wires is connected to one second group of flat wires in the first layer of flat wires through one connection segment.

In the flat wire motor of this application, a first layer of flat wires of each phase winding is closer to the motor stator than another layer of flat wires. One of flat wires of one first group of flat wires in the first layer of flat wires is connected to one second group of flat wires in the first layer of flat wires through a connection segment, and the connection segment is a same-layer connection segment.

Lead-out wires of phase windings are located at a same flat wire layer, so that star points of the phases are located at a same layer, radial space of the motor stator 101 is fully utilized, and the star points of the phases are close to each other. This helps simplify a busbar structure, reduces an end portion length of the stator winding 2, and facilitates miniaturization and lightweighting of the flat wire motor 10.

In an implementation, refer to FIG. 9 to FIG. 16. A second layer of flat wires is the L1^{th} layer of flat wires. A difference between a number of stator slots crossed by a connection segment for connecting a first group of flat wires and a second group of flat wires in the second layer of flat wires and a number of stator slots crossed by a connection segment for connecting a first group of flat wires and a second group of flat wires in the first layer of flat wires is 1. Through the two same-layer connection segments with different lengths, connections between flat wires have different spans. This helps form a short-pitch winding, thereby reducing a harmonic winding factor and improving NVH performance of the flat wire motor.

The following describes a winding manner of the flat wire motor 10 provided in embodiments of this application with reference to the accompanying drawings.

FIG. 9 is a connection diagram 1 of a first U-phase branch of the U-phase winding in FIG. 7. FIG. 9A is a partial enlarged view of the area A5 in FIG. 9. FIG. 9B is a partial enlarged view of the area A6 in FIG. 9.

Refer to FIG. 9, FIG. 9A, and FIG. 9B. A lead-in wire 71 of a first U-phase winding is a first branch lead-in wire 711, a lead-out wire 72 of the first U-phase winding is a first branch lead-out wire 721, and the first branch lead-out wire 721 and the first branch lead-out wire 721 are located at a crown end of the stator winding 2.

The plurality of circles of flat wires of the stator winding 2 include a first circle of flat wires 31, a second circle of flat wires 32, a third circle of flat wires 33, and a fourth circle of flat wires 34. The first circle of flat wires 31, the second circle of flat wires 32, the third circle of flat wires 33, and the fourth circle of flat wires 34 are sequentially arranged in the direction B.

The first U-phase branch of the U-phase winding uses the 1^{st} layer of the 1^{st} stator slot as a lead-in end, and the first branch lead-in wire 711 is configured to connect the 1^{st} layer of flat wires in the 1^{st} stator slot. The first branch lead-in wire enters from the 1^{st} layer of the 1^{st} stator slot, exits from the 2^{nd} layer of the 5^{th} stator slot, then enters from the 1^{st} layer of the 10^{th} stator slot, exits from the 2^{nd} layer of the 14^{th} stator slot, then enters from the 1^{st} layer of the 19^{th} stator slot, exits from the 2^{nd} layer of the 23^{rd} stator slot, then enters from the 1^{st} layer of the 28^{th} stator slot, and exits from the 2^{nd} layer of the 32^{nd} stator slot. In this way, the first branch flat wire a221 in the first circle of flat wires 31 is connected in a traversal manner.

Then, the first branch lead-in wire enters from the 3^{rd} layer of the 37^{th} stator slot, exits from the 4^{th} layer of the 41^{st} stator slot, then enters from the 3^{rd} layer of the 46^{th} stator slot, exits from the 4^{th} layer of the 50^{th} stator slot, then enters from the 3^{rd} layer of the 55^{th} stator slot, exits from the 4^{th} layer of the 59^{th} stator slot, then enters from the 3^{rd} layer of the 64^{th} stator slot, and exits from the 4^{th} layer of the 68^{th} stator slot. In this way, the first branch flat wires a221 in the first circle of flat wires 31 and the second circle of flat wires 32 are connected in a traversal manner.

Then, the first branch lead-in wire enters from the 5^{th} layer of the 1^{st} stator slot, exits from the 6^{th} layer of the 5^{th} stator slot, then enters from the 5^{th} layer of the 10^{th} stator slot, exits from the 6^{th} layer of the 14^{th} stator slot, then enters from the 5^{th} layer of the 19^{th} stator slot, exits from the 6^{th} layer of the 23^{rd} stator slot, then enters from the 5^{th} layer of the 28^{th} stator slot, and exits from the 6^{th} layer of the 32^{nd} stator slot. In this way, the first branch flat wires a221 in the first circle of flat wires 31, the second circle of flat wires 32, and the third circle of flat wires 33 are connected in a traversal manner.

Then, the first branch lead-in wire enters from the 7^{th} layer of the 37^{th} stator slot, exits from the 8^{th} layer of the 41^{st} stator slot, then enters from the 7^{th} layer of the 46^{th} stator slot, exits from the 8^{th} layer of the 50^{th} stator slot, then enters from the 7^{th} layer of the 55^{th} stator slot, exits from the 8^{th} layer of the 59^{th} stator slot, then enters from the 7^{th} layer of the 64^{th} stator slot, and exits from the 8^{th} layer of the 68^{th} stator slot. In this way, the first branch flat wire a221 in the U-phase winding is connected in a traversal manner.

Then, the first branch lead-in wire enters from the 8^{th} layer of the 1^{st} stator slot, exits from the 7^{th} layer of the 69^{th} stator slot, then enters from the 8^{th} layer of the 64^{th} stator slot, exits from the 7^{th} layer of the 60^{th} stator slot, then enters from the 8^{th} layer of the 55^{th} stator slot, exits from the 7^{th} layer of the 51 ^{st} stator slot, then enters from the 8^{th} layer of the 46^{th} stator slot, and exits from the 7^{th} layer of the 42^{nd} stator slot. In this way, the first branch flat wire a221 in the U-phase winding and the first branch flat wire c223 in the fourth circle of flat wires 34 are connected in a traversal manner.

Then, the first branch lead-in wire enters from the 6^{th} layer of the 37^{th} stator slot, exits from the 5^{th} layer of the 33^{rd} stator slot, then enters from the 6^{th} layer of the 28^{th} stator slot, exits from the 5^{th} layer of the 24^{th} stator slot, then enters from the 6^{th} layer of the 19^{th} stator slot, exits from the 5^{th} layer of the 15^{th} stator slot, then enters from the 6^{th} layer of the 10^{th} stator slot, and exits from the 5^{th} layer of the 6^{th} stator slot. In this way, the first branch flat wire a221 in the U-phase winding, the first branch flat wire c223 in the fourth circle of flat wires 34, and the first branch flat wire c223 in the third circle of flat wires 33 are connected in a traversal manner.

Then, the first branch lead-in wire enters from the 4^{th} layer of the 1^{st} stator slot, exits from the 3^{rd} layer of the 69^{th} stator slot, then enters from the 4^{th} layer of the 64^{th} stator slot, exits from the 3^{rd} layer of the 60^{th} stator slot, then enters from the 4^{th} layer of the 55^{th} stator slot, exits from the 3^{rd} layer of the 51^{st} stator slot, then enters from the 4^{th} layer of the 46^{th} stator slot, and exits from the 3^{rd} layer of the 42^{nd} stator slot. In this way, the first branch flat wires a221 in the U-phase winding, and the first branch flat wires c223 in the fourth circle of flat wires 34, the second circle of flat wires 32, and the third circle of flat wires 33 are connected in a traversal manner.

Then, the first branch lead-in wire enters from the 2^{nd} layer of the 37^{th} stator slot, exits from the 1^{st} layer of the 33^{rd} stator slot, then enters from the 2^{nd} layer of the 28^{th} stator slot, exits from the 1^{st} layer of the 24^{th} stator slot, then enters from the 2^{nd} layer of the 19^{th} stator slot, exits from the 1^{st} layer of the 15^{th} stator slot, then enters from the 2^{nd} layer of the 10^{th} stator slot, and exits from the 1^{st} layer of the 6^{th} stator slot. In this way, the first branch flat wire a221 and the first branch flat wire c223 in the U-phase winding are connected in a traversal manner.

Then, the first branch lead-in wire enters from the 1^{st} layer of the 2^{nd} stator slot, exits from the 2^{nd} layer of the 6^{th} stator slot, then enters from the 1^{st} layer of the 11^{th} stator slot, exits from the 2^{nd} layer of the 15^{th} stator slot, then enters from the 1^{st} layer of the 20^{th} stator slot, exits from the 2^{nd} layer of the 24^{th} stator slot, then enters from the 1^{st} layer of the 29^{th} stator slot, and exits from the 2^{nd} layer of the 33^{rd} stator slot. In this way, the first branch flat wire a221 and the first branch flat wire c223 in the U-phase winding and the first branch flat wire b222 in the first circle of flat wires 31 are connected in a traversal manner.

Then, the first branch lead-in wire enters from the 3^{rd} layer of the 38^{th} stator slot, exits from the 4^{th} layer of the 42^{nd} stator slot, then enters from the 3^{rd} layer of the 47^{th} stator slot, exits from the 4^{th} layer of the 51^{st} stator slot, then enters from the 3^{rd} layer of the 56^{th} stator slot, exits from the 4^{th} layer of the 60^{th} stator slot, then enters from the 3^{rd} layer of the 65^{th} stator slot, and exits from the 4^{th} layer of the 69^{th} stator slot. In this way, the first branch flat wire a221 and the first branch flat wire c223 in the U-phase winding, and the first branch flat wires b222 in the first circle of flat wires 31 and the second circle of flat wires 32 are connected in a traversal manner.

Then, the first branch lead-in wire enters from the 5^{th} layer of the 2^{nd} stator slot, exits from the 6^{th} layer of the 6^{th} stator slot, then enters from the 5^{th} layer of the 11^{th} stator slot, exits from the 6^{th} layer of the 15^{th} stator slot, then enters from the 5^{th} layer of the 20^{th} stator slot, exits from the 6^{th} layer of the 24^{th} stator slot, then enters from the 5^{th} layer of the 29^{th} stator slot, and exits from the 6^{th} layer of the 33^{rd} stator slot. In this way, the first branch flat wire a221 and the first branch flat wire c223 in the U-phase winding, and the first branch flat wires b222 in the first circle of flat wires 31, the second circle of flat wires 32, and the third circle of flat wires 33 are connected in a traversal manner.

Then, the first branch lead-in wire enters from the 7^{th} layer of the 38^{th} stator slot, exits from the 8^{th} layer of the 42^{nd} stator slot, then enters from the 7^{th} layer of the 47^{th} stator slot, exits from the 8^{th} layer of the 51^{st} stator slot, then enters from the 7^{th} layer of the 56^{th} stator slot, exits from the 8^{th} layer of the 60^{th} stator slot, then enters from the 7^{th} layer of the 65^{th} stator slot, and exits from the 8^{th} layer of the 69^{th} stator slot. In this way, the first branch flat wire a221, the first branch flat wire c223, and the first branch flat wire b222 in the U-phase winding are connected in a traversal manner. The 8^{th} layer of the 69^{th} stator slot is used as a lead-out end of the first U-phase branch of the U-phase winding, and the lead-out wire 721 is configured to connect the 8^{th} layer of flat wires in the 33^{rd} stator slot.

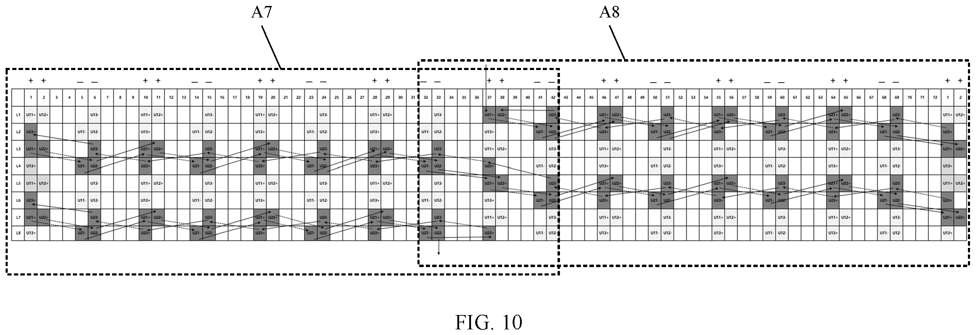

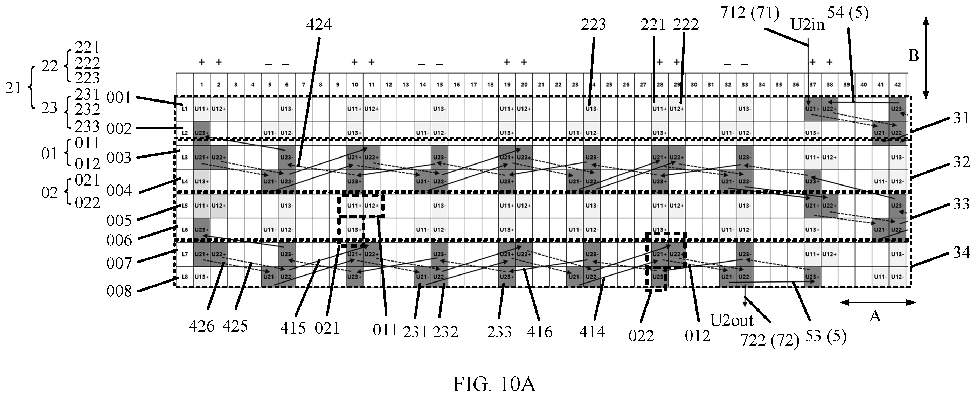

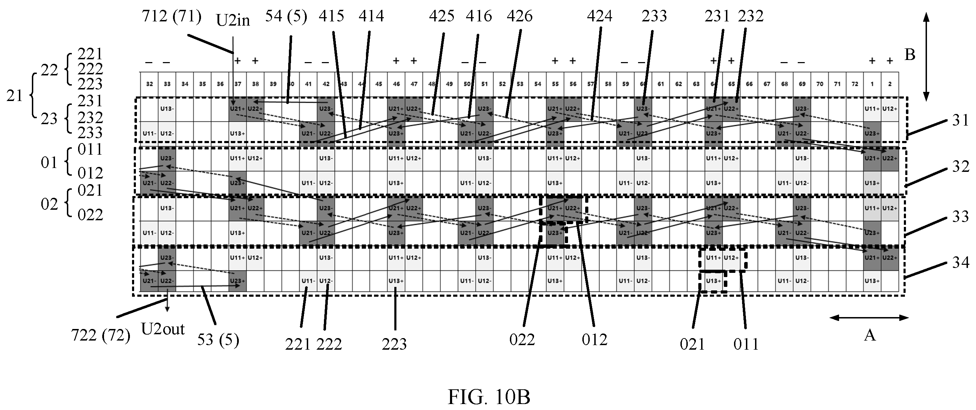

FIG. 10 is a connection diagram 1 of a second U-phase branch of the U-phase winding in FIG. 7. FIG. 10A is a partial enlarged view of the area A7 in FIG. 10. FIG. 10B is a partial enlarged view of the area A8 in FIG. 10. Refer to FIG. 10, FIG. 10A, and FIG. 10B. A lead-in wire 71 of a second U-phase winding is a second branch lead-in wire 712, a lead-out wire 72 of the second U-phase winding is a second branch lead-out wire 722, and the second branch lead-out wire 712 and the second branch lead-out wire 722 are located at the crown end of the stator winding 2.

The second U-phase branch of the U-phase winding uses the 1^{st} layer of the 37^{th} stator slot as a lead-in end, and uses the 8^{th} layer of the 33^{rd} stator slot as a lead-out end, and the second branch lead-in wire 712 is configured to connect the 1^{st} layer of flat wires in the 1^{st} stator slot. The second branch lead-out wire 722 is configured to connect the 8^{th} layer of flat wires in the 33^{rd} stator slot.

A winding principle of the flat wire motor stator in FIG. 10 is the same as the winding principle of the stator winding of the flat wire motor in FIG. 9. Refer to the flat wire motor in FIG. 10, FIG. 10A, and FIG. 10B. The second branch flat wire a231 is connected to the other half of stator slots 11 at two other layers after being wave-wound every two layers, that is, an upper layer and a lower layer, from the 1^{st} layer of the 37^{th} slot by half of the number of slots, and is connected to the second branch flat wire c233 at the 8^{th} layer through a third same-layer welding segment 423. The third branch flat wire c233 is connected to the second branch flat wire b232 at the 1^{st} layer in the same wave-winding manner, and the second branch flat wire b is led out at the 8^{th} layer in the same wave-winding manner.

In the flat wire motor shown in FIG. 9 and FIG. 10, the first U-phase branch and the second U-phase branch in the U-phase winding are symmetrically distributed, and the flat wire 21 of the first U-phase branch and the flat wire 21 of the second U-phase branch in the U-phase winding are connected in a traversal manner, so that the three-phase winding maintains electric potential balance, thereby reducing a risk of a circulating current between branches, and improving NVH performance of the flat wire motor.

In the flat wire motor shown in FIG. 9 to FIG. 10B, the first branch lead-out wire 721 and the second branch lead-out wire 722 of the U-phase winding are located at the 1^{st} layer. This makes full use of radial space of the motor stator, so that star points of the phases are close to each other, thereby simplifying a busbar structure, reducing an end portion length of the stator winding, and facilitating miniaturization and lightweighting of the flat wire motor.

In the flat wire motor shown in FIG. 9 to FIG. 10B, a same-layer connection segment 5 of the first U-phase branch includes a first same-layer cross-wire segment 51 and a second same-layer cross-wire segment 52. A same-layer connection segment 5 of the second U-phase branch includes a third same-layer cross-wire segment 53 and a fourth same-layer cross-wire segment 54. Both the same-layer connection segment 5 of the first U-phase branch and the same-layer connection segment 5 of the second U-phase branch are located at the crown end.

In the flat wire motor shown in FIG. 9 and FIG. 10B, a connection segment 4 for connecting two first branch flat wires a221 is a first cross-wire segment 411, a connection segment 4 for connecting two first branch flat wires b222 is a second cross-wire segment 412, a connection segment 4 for connecting two first branch flat wires c223 is a third cross-wire segment 413, a connection segment 4 for connecting two second branch flat wires a231 is a fourth cross-wire segment 414, a connection segment 4 for connecting two second branch flat wires b232 is a fifth cross-wire segment 415, and a connection segment 4 for connecting two second branch flat wires c233 is a sixth cross-wire segment 416.

A connection segment 4 for connecting two first branch flat wires a221 is a first welding segment 421, a connection segment 4 for connecting two first branch flat wires b222 is a second welding segment 422, a connection segment 4 for connecting two first branch flat wires c423 is a third welding segment 423, a connection segment 4 for connecting two second branch flat wires a231 is a fourth welding segment 424, a connection segment 4 for connecting two second branch flat wires b232 is a fifth welding segment 425, and a connection segment 4 for connecting two second branch flat wires c233 is a sixth welding segment 426.

In the flat wire motor shown in FIG. 9 to FIG. 10B, a span of a cross-wire segment is 5, and a span of a welding segment is 4. Spans of the first same-layer cross-wire segment 51 and the third same-layer cross-wire segment 53 are 5, and spans of the second same-layer cross-wire segment 52 and the fourth same-layer cross-wire segment 54 are 4.

In the embodiment shown in FIG. 9 to FIG. 10B of this application, both a flat wire distribution manner of the W-phase winding and a flat wire distribution manner of the V-phase winding are the same as a flat wire distribution manner of the U-phase winding, both a flat wire connection manner of the W-phase winding and a flat wire connection manner of the V-phase winding are the same as a flat wire connection manner of the U-phase winding, and the flat wire connection manner of the W-phase winding and the flat wire connection manner of the V-phase winding may be obtained by translating the flat wire connection manner of the U-phase winding. Details are not described herein in this application.

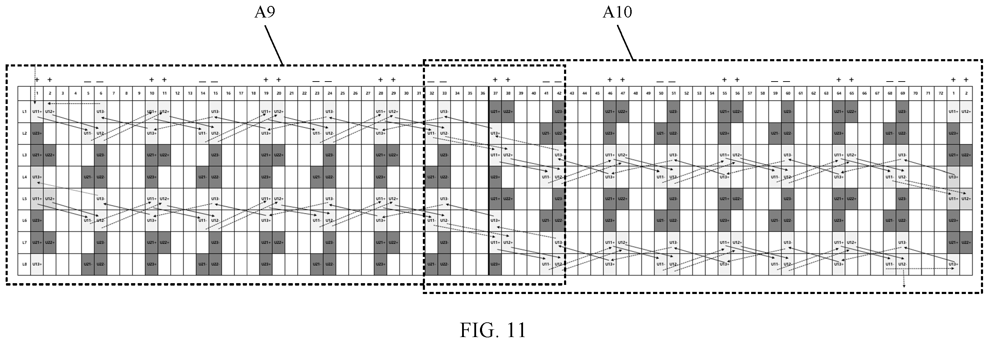

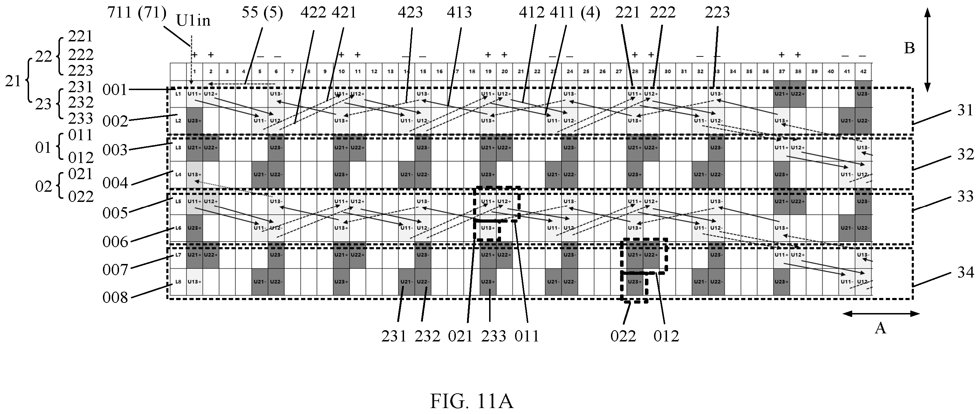

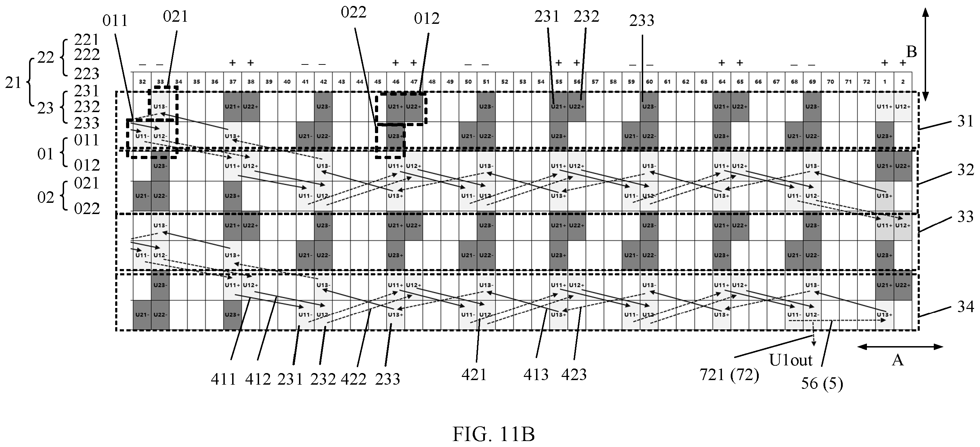

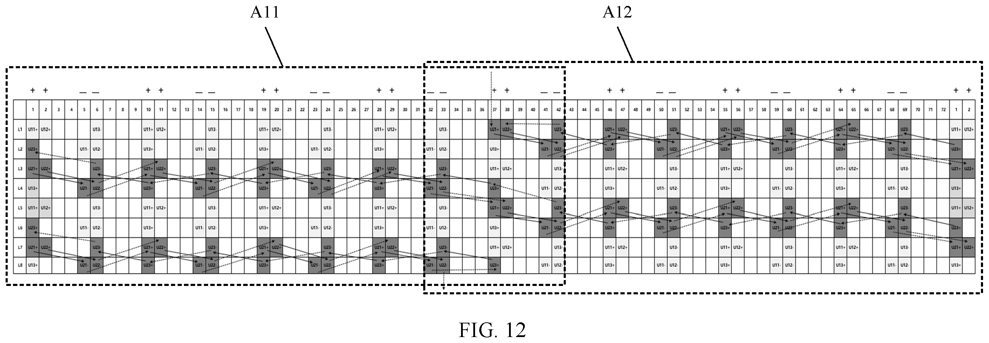

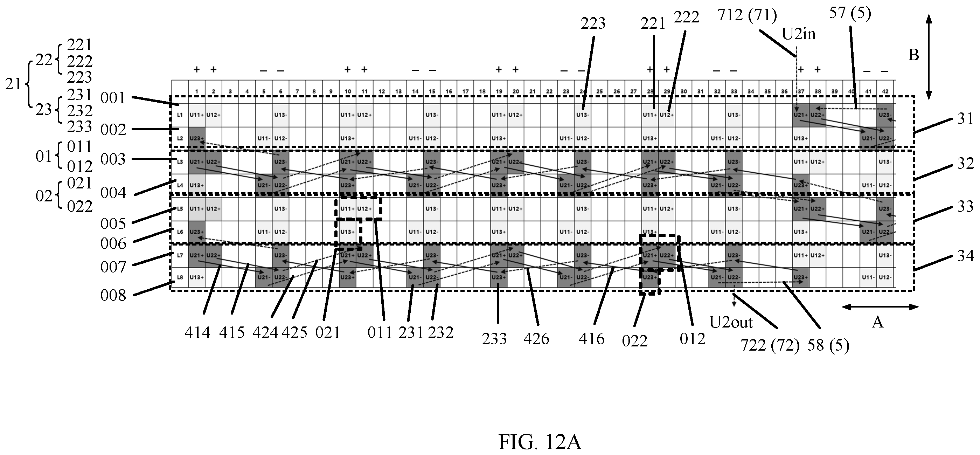

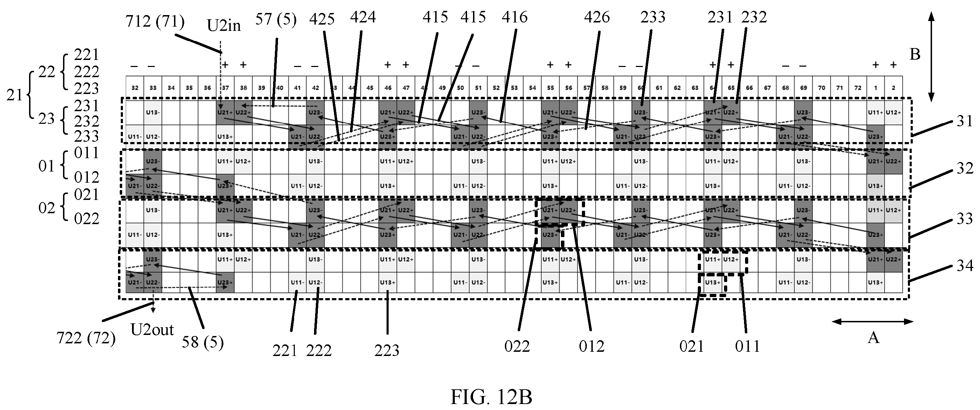

FIG. 11 is a connection diagram 2 of a first U-phase branch of the U-phase winding in FIG. 7. FIG. 11A is a partial enlarged view of the area A9 in FIG. 11. FIG. 11B is a partial enlarged view of the area A10 in FIG. 11. FIG. 12 is a connection diagram 2 of a second U-phase branch of the U-phase winding in FIG. 7. FIG. 12A is a partial enlarged view of the area A11 in FIG. 12. FIG. 12B is a partial enlarged view of the area A12 in FIG. 12.

Different from the flat wire motor shown in FIG. 9 to FIG. 10B, in the flat wire motor shown in FIG. 11 to FIG. 12B, both the same-layer connection segment 5 of the first U-phase branch and the same-layer connection segment 5 of the second U-phase branch are located at the welding end.

In the flat wire motor shown in FIG. 11 to FIG. 12B, a span of a cross-wire segment is 4, and a span of a welding segment is 5. Spans of the first same-layer welding segment 55 and the third same-layer welding segment 57 are 4, and spans of the second same-layer welding segment 56 and the fourth same-layer welding segment 58 are 5.

In the flat wire motor shown in FIG. 11 to FIG. 12B, a winding principle is the same as the winding principle of the flat wire motor in FIG. 9 and FIG. 10. Details are not described herein again.

In the embodiment shown in FIG. 11 to FIG. 12B of this application, both a flat wire distribution manner of the W-phase winding and a flat wire distribution manner of the V-phase winding are the same as a flat wire distribution manner of the U-phase winding, both a flat wire connection manner of the W-phase winding and a flat wire connection manner of the V-phase winding are the same as a flat wire connection manner of the U-phase winding, and the flat wire connection manner of the W-phase winding and the flat wire connection manner of the V-phase winding may be obtained by translating the flat wire connection manner of the U-phase winding. Details are not described herein in this application.

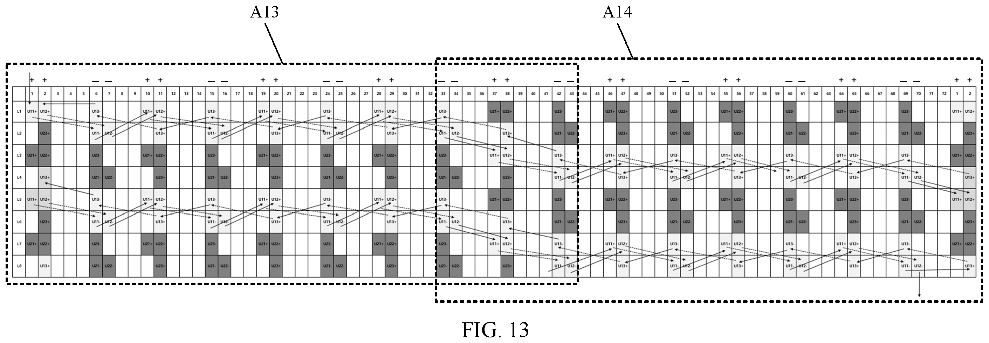

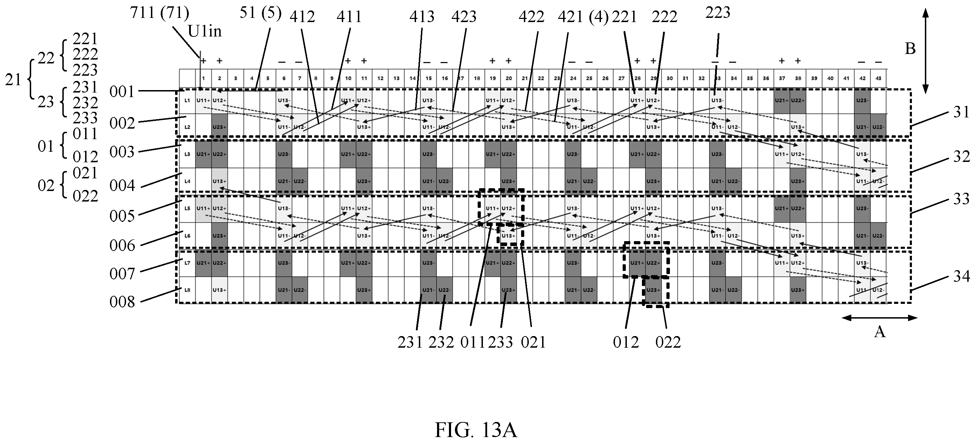

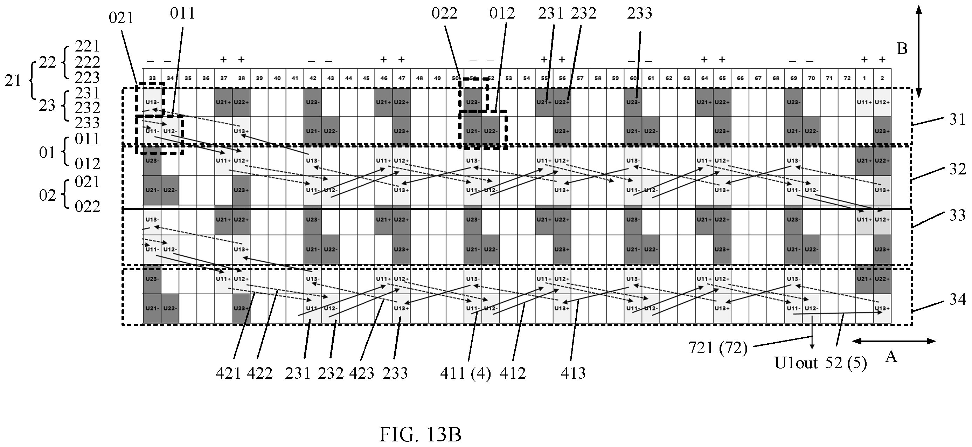

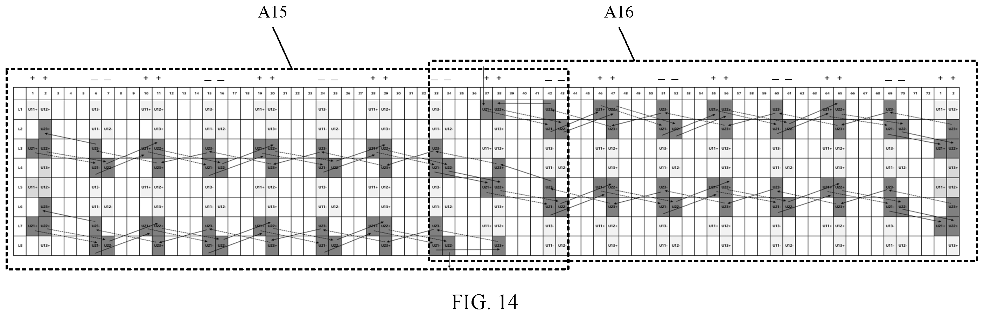

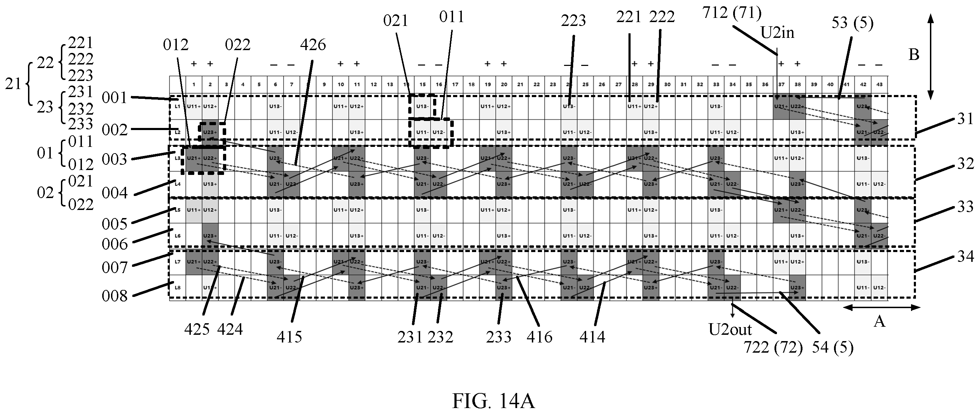

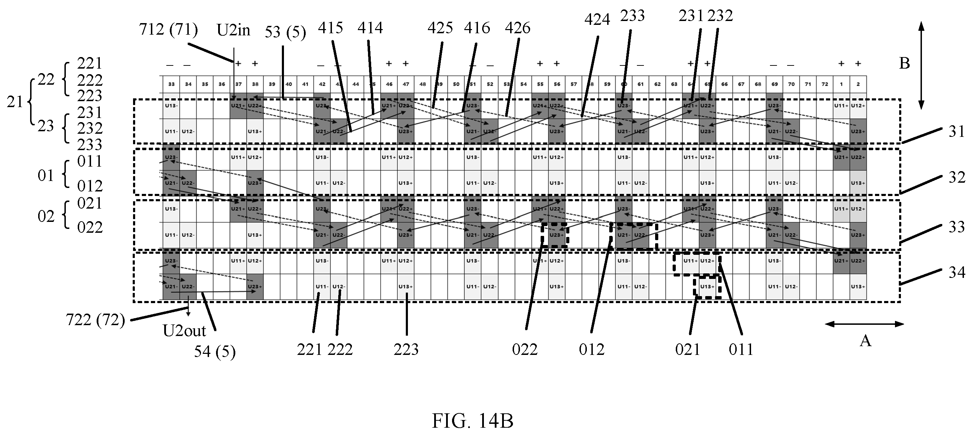

FIG. 13 is a connection diagram 1 of a first U-phase branch of the U-phase winding in FIG. 8. FIG. 13A is a partial enlarged diagram of the area A13 in FIG. 13. FIG. 13B is a partial enlarged diagram of the area A14 in FIG. 13. FIG. 14 is a connection diagram 2 of a first U-phase branch of the U-phase winding in FIG. 8. FIG. 14A is a partial enlarged view of the area A15 in FIG. 14. FIG. 14B is a partial enlarged view of the area A 16 in FIG. 14.

Different from the flat wire motor shown in FIG. 9 to FIG. 10B, in the flat wire motor shown in FIG. 13 to FIG. 14B, a span of a cross-wire segment is 4, and a span of a welding segment is 5. Spans of the first same-layer cross-wire segment 51 and the third same-layer cross-wire segment 53 are 4, and spans of the second same-layer cross-wire segment 52 and the fourth same-layer cross-wire segment 54 are 5.

In the flat wire motor shown in FIG. 13 to FIG. 14B, a winding principle is the same as the winding principle of the flat wire motor in FIG. 9 and FIG. 10. Details are not described herein again.

In the embodiment shown in FIG. 13 to FIG. 14B of this application, both a flat wire distribution manner of the W-phase winding and a flat wire distribution manner of the V-phase winding are the same as a flat wire distribution manner of the U-phase winding, both a flat wire connection manner of the W-phase winding and a flat wire connection manner of the V-phase winding are the same as a flat wire connection manner of the U-phase winding, and the flat wire connection manner of the W-phase winding and the flat wire connection manner of the V-phase winding may be obtained by translating the flat wire connection manner of the U-phase winding. Details are not described herein in this application.

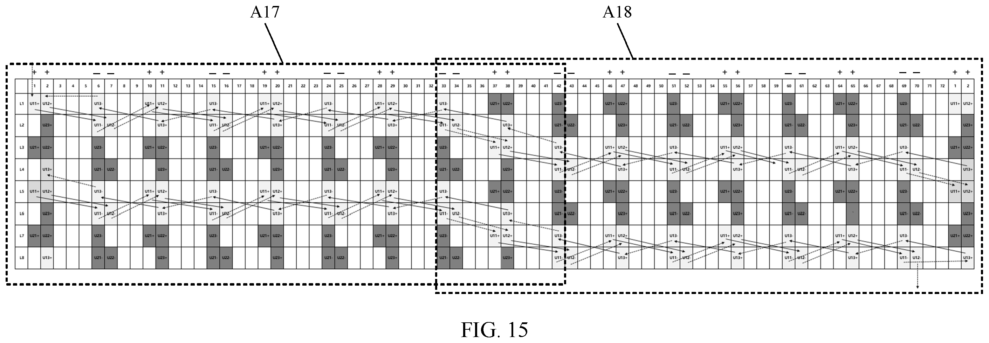

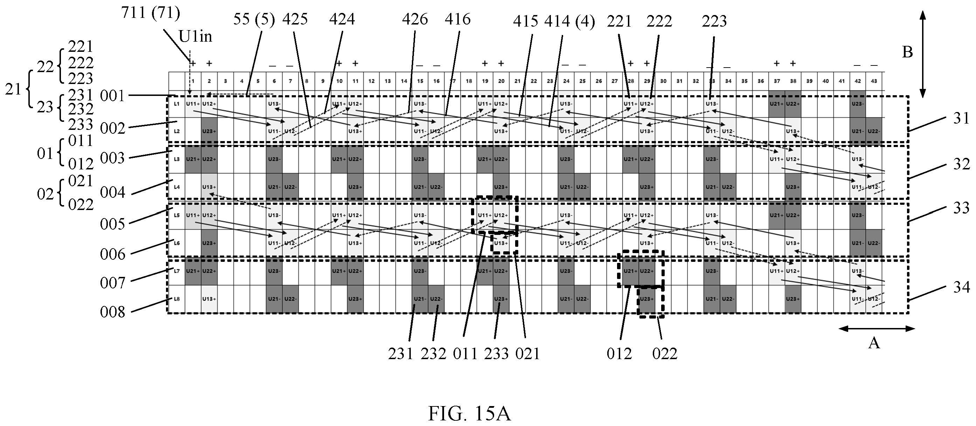

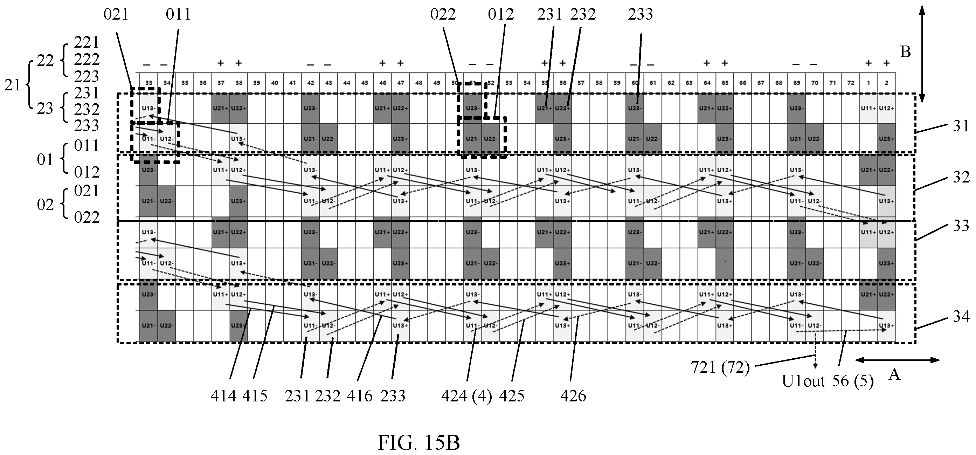

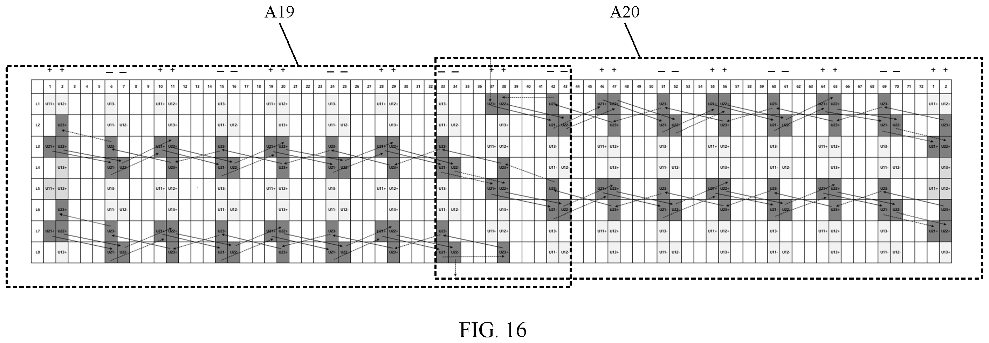

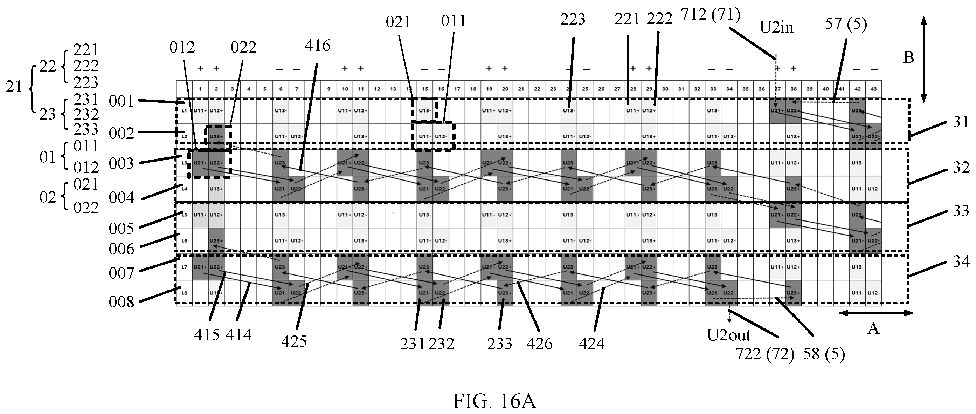

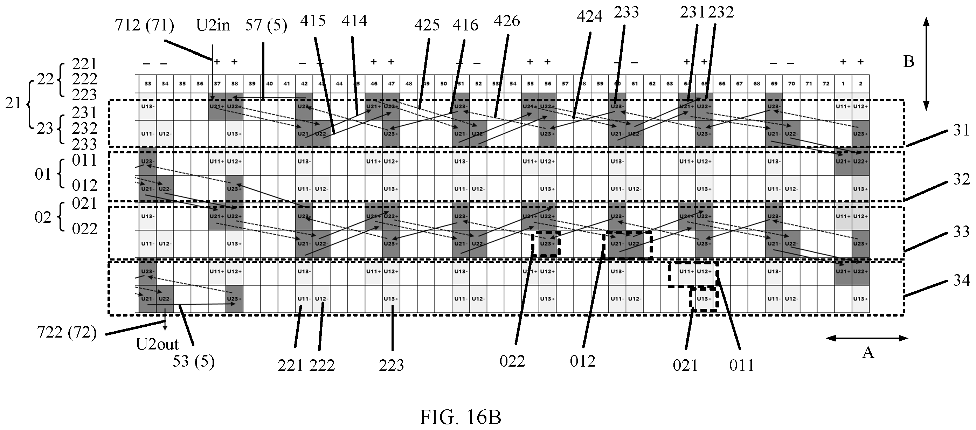

FIG. 15 is a connection diagram 1 of a second U-phase branch of the U-phase winding in FIG. 8. FIG. 15A is a partial enlarged view of the area A17 in FIG. 15. FIG. 15B is a partial enlarged view of the area A18 in FIG. 15. FIG. 16 is a connection diagram 2 of a second U-phase branch of the U-phase winding in FIG. 8. FIG. 16A is a partial enlarged view of the area A19 in FIG. 16. FIG. 16B is a partial enlarged view of the area A20 in FIG. 16.

Different from the flat wire motor shown in FIG. 13 to FIG. 14B, in the flat wire motor shown in FIG. 15 to FIG. 16B, both the same-layer connection segment 5 of the first U-phase branch and the same-layer connection segment 5 of the second U-phase branch are located at the welding end.

In the flat wire motor shown in FIG. 15 to FIG. 16B, a span of a cross-wire segment is 5, and a span of a welding segment is 4. Spans of the first same-layer welding segment 55 and the third same-layer welding segment 57 are 4, and spans of the second same-layer welding segment 56 and the fourth same-layer welding segment 58 are 5.

In the flat wire motor shown in FIG. 15 to FIG. 16B, a winding principle is the same as the winding principle of the flat wire motor in FIG. 13 and FIG. 14. Details are not described herein again.

In the embodiment shown in FIG. 15 to FIG. 16B of this application, both a flat wire distribution manner of the W-phase winding and a flat wire distribution manner of the V-phase winding are the same as a flat wire distribution manner of the U-phase winding, both a flat wire connection manner of the W-phase winding and a flat wire connection manner of the V-phase winding are the same as a flat wire connection manner of the U-phase winding, and the flat wire connection manner of the W-phase winding and the flat wire connection manner of the V-phase winding may be obtained by translating the flat wire connection manner of the U-phase winding. Details are not described herein in this application.

FIG. 9A to FIG. 16B show a connection manner of a three-phase winding with 72 slots, 16 poles, and 8 layers. In this application, an example in which the three-phase winding with 72 slots, 16 poles, and 8 layers uses the winding manner in FIG. 9A, FIG. 9B, FIG. 10A, and FIG. 10B is used. Comparison is performed with harmonic winding factors of various orders of a full-pitch winding that has 72 slots, 12 poles, and 8 layers and whose number q of slots per pole per phase is 1, a short-pitch winding that has 72 slots, 12 poles, and 8 layers and whose number q of slots per pole per phase is 1, a full-pitch winding that has 72 slots, 24 poles, and 8 layers and whose number q of slots per pole per phase is 2, and a short-pitch winding that has 72 slots, 24 poles, and 8 layers and whose number q of slots per pole per phase is 1.

Table 1 is a table of comparison between harmonic winding factors of various orders of an embodiment in which the three-phase winding with 72 slots, 16 poles, and 8 layers in embodiments of this application uses the winding manner in FIG. 9A, FIG. 9B, FIG. 10A, and FIG. 10B, the full-pitch winding that has 72 slots, 12 poles, and 8 layers and whose number q of slots per pole per phase is 1, the short-pitch winding that has 72 slots, 12 poles, and 8 layers and whose number q of slots per pole per phase is 1, the full-pitch winding that has 72 slots, 24 poles, and 8 layers and whose number q of slots per pole per phase is 2, and the short-pitch winding that has 72 slots, 24 poles, and 8 layers and whose number q of slots per pole per phase is 1.

**Table 1**

| Harmonic order | q=1 full-pitch winding | q=2 full-pitch winding | q=1 short-pitch winding | q=2 short-pitch winding | Embodiments of this application |
|---|---|---|---|---|---|
| 1 | 0.9659 | 1 | 0.9012 | 1 | 0.9452 |
| 5 | 0.2588 | 1 | 0.0173 | 1 | 0.1398 |
| 7 | 0.2588 | 1 | 0.0173 | 1 | 0.0607 |
| 11 | 0.9659 | 1 | 0.9012 | 1 | 0.0607 |
| 13 | 0.9659 | 1 | 0.9012 | 1 | 0.1398 |
| 17 | 0.2588 | 1 | 0.0173 | 1 | 0.9452 |
| 19 | 0.2588 | 1 | 0.0173 | 1 | 0.9452 |
| 23 | 0.9659 | 1 | 0.9012 | 1 | 0.1398 |
| 25 | 0.9659 | 1 | 0.9012 | 1 | 0.0607 |

It can be learned through comparison from Table 1 that the winding factor in embodiments of this application is compared with winding factors of the full-pitch winding whose number q of slots per pole per phase is 1 and the full-pitch winding whose number q of slots per pole per phase is 2. In embodiments of this application, the 5^{th}-order harmonic, the 7^{th}-order harmonic, the 11^{th}-order harmonic, the 11^{th}-order harmonic, the 23^{rd}-order harmonic, and the 25^{th}-order harmonic of the three-phase winding are all weakened, so that a high-order harmonic suppression effect is better, torque ripple performance is better, and rotor skewing complexity is reduced, to improve NVH performance.

The winding factor in the embodiment in which the three-phase winding with 72 slots, 16 poles, and 8 layers uses the winding manner in FIG. 9A, FIG. 9B, FIG. 10A, and FIG. 10B in this application is compared with winding factors of the short-pitch winding whose number q of slots per pole per phase is 1 and the short-pitch winding whose number q of slots per pole per phase is 2. In embodiments of this application, a fundamental harmonic winding factor is larger, and costs are more favorable.

In the embodiments shown in FIG. 7 to FIG. 16B, each phase winding of the stator winding in this application is a two-branch winding, and both the crown end and the welding end of the stator winding 2 can lead out a wire. In addition, the Upin hairpin wire has a small number of wire types, and the stator winding 2 has a simple structure, so that winding design flexibility is improved.

A number of slots per pole per phase of the stator winding is 1.5, and the stator winding is a fractional slot winding. A fundamental factor of the winding is high, and a harmonic factor is low. The 5^{th}-order harmonic, the 7^{th}-order harmonic, the 11^{th}-order harmonic, the 11^{th}-order harmonic, the 23^{rd}-order harmonic, and the 25^{th}-order harmonic of the winding can all be weakened, thereby improving NVH performance. In each phase winding, two branch flat wires 21 are evenly distributed at different positions in a stator slot 11 at each pole, back electromotive forces and currents of the phase windings are completely the same, and there is no circulating current between branches, thereby ensuring temperature uniformity of the winding, avoiding an NVH problem, and further improving a service life of the motor. The lead-out wires 72 of the phases are located at the same layer, the lead-out wires 72 of the phases can make full use of the radial space, and the star points of the phases are close to each other, thereby simplifying a busbar structure and reducing an end portion height. Upin hairpin wires at the layers are independent of each other, there is no additional cross-layer hairpin wire, and fully automatic wire insertion can be implemented by using independent wire cups, thereby simplifying a manufacturing process and facilitating mass production.

The foregoing is merely specific implementations of this application. However, the protection scope of this application is not limited thereto. Any change or replacement within the technical scope disclosed in this application shall fall within the protection scope of this application. Therefore, the protection scope of this application shall be subject to the protection scope of the claims.

## Claims

1. A flat wire motor, wherein a motor stator of the flat wire motor comprises a plurality of stator slots, the plurality of stator slots are arranged at intervals in a circumferential direction of the motor stator, each stator slot is configured to accommodate a plurality of flat wires, the plurality of flat wires in each stator slot are sequentially arranged in a layered manner in a radial direction of the motor stator, flat wires in the plurality of stator slots are arranged into a plurality of circles of flat wires in the radial direction of the motor stator, and each circle of flat wires comprises a plurality of layers of flat wires arranged in the radial direction of the motor stator, wherein
a plurality of flat wires configured to transmit a same-phase alternating current in each circle of flat wires comprise two groups of branch flat wires, the two groups of branch flat wires are respectively configured to transmit different branches of the same-phase alternating current, and each group of branch flat wires is configured to transmit one branch of the same-phase alternating current;
each group of branch flat wires comprises a plurality of first groups of flat wires and a plurality of second groups of flat wires, each first group of flat wires comprises two flat wires, the two flat wires of the first group of flat wires are arranged at a same layer of two adjacent stator slots in a one-to-one manner, each second group of flat wires comprises one flat wire, and the one flat wire of each second group of flat wires in one layer of flat wires in each circle of flat wires and one of flat wires of one first group of flat wires in another layer of flat wires are located in a same stator slot; and
a plurality of first groups of flat wires and a plurality of second groups of flat wires of each group of branch flat wires in each layer of flat wires are alternately arranged in the circumferential direction of the motor stator, and two groups of branch flat wires configured to transmit a same-branch alternating current in two adjacent layers of flat wires are arranged in a staggered manner in the circumferential direction of the motor stator.

2. The flat wire motor according to claim 1, wherein one layer of flat wires in one of two adjacent circles of flat wires and one layer of flat wires in the other one of the two adjacent circles of flat wires are adjacently arranged in the radial direction of the motor stator, and two groups of branch flat wires configured to transmit a same-branch alternating current in the one layer of flat wires in the one circle of flat wires and the one layer of flat wires in the other one circle of flat wires are arranged in a staggered manner in the circumferential direction of the motor stator; and
a number of stator slots in which the two groups of branch flat wires configured to transmit the same-branch alternating current in the one layer of flat wires in the one circle of flat wires and the one layer of flat wires in the other one circle of flat wires are staggered is greater than a number of stator slots in which two groups of branch flat wires configured to transmit a same-branch alternating current in each circle of flat wires are staggered in the circumferential direction of the motor stator.

3. The flat wire motor according to claim 2, wherein a sum of the number of stator slots in which the two groups of branch flat wires configured to transmit the same-branch alternating current in the one layer of flat wires in the one circle of flat wires and the one layer of flat wires in the other one circle of flat wires are staggered and the number of stator slots in which the two groups of branch flat wires configured to transmit the same-branch alternating current in each circle of flat wires are staggered in the circumferential direction of the motor stator is half of a number of the plurality of stator slots.

4. The flat wire motor according to claim 3, wherein two groups of branch flat wires in each layer of flat wires are sequentially arranged in the circumferential direction of the motor stator, and the two groups of branch flat wires in each layer of flat wires have a same number of flat wires.

5. The flat wire motor according to any one of claims 1 to 4, wherein a difference between a number of stator slots in which two groups of branch flat wires configured to transmit a same-branch alternating current in two adjacent layers of flat wires in each circle of flat wires and a number of stator slots between a first group of flat wires and the second group of flat wires that are adjacent in the circumferential direction of the motor stator in each layer of flat wires is 1.

6. The flat wire motor according to claim 5, wherein one first group of flat wires in one of two adjacent circles of flat wires is connected to one first group of flat wires in the other one of the two adjacent circles of flat wires through two connection segments with a same length.

7. The flat wire motor according to claim 6, wherein each first group of flat wires in one of two adjacent layers of flat wires in each circle of flat wires is connected to one first group of flat wires in the other one of the two adjacent layers of flat wires through two connection segments with a same length; and
the two connection segments for connecting the two first groups of flat wires in the two adjacent circles of flat wires are located at one axial end of the motor stator, and the two connection segments for connecting the two first groups of flat wires in the same circle of flat wires are located at the other axial end of the motor stator.

8. The flat wire motor according to claim 7, wherein a difference between a number of stator slots crossed by the two connection segments for connecting the two first groups of flat wires in the two adjacent circles of flat wires and a number of stator slots crossed by the two connection segments for connecting the two first groups of flat wires in the same circle of flat wires is 1.

9. The flat wire motor according to any one of claims 5 to 8, wherein one second group of flat wires in one of two adjacent circles of flat wires is connected to one second group of flat wires in the other one of the two adjacent circles of flat wires through one connection segment; and
the two connection segments for connecting the two first groups of flat wires in the two adjacent circles of flat wires and the connection segment for connecting the two second groups of flat wires in the two adjacent circles of flat wires are located at a same axial end of the motor stator, and a number of stator slots crossed by the two connection segments for connecting the two first groups of flat wires in the two adjacent circles of flat wires is the same as a number of stator slots crossed by the connection segment for connecting the two second groups of flat wires in the two adjacent circles of flat wires.

10. The flat wire motor according to claim 9, wherein each second group of flat wires in one of two adjacent layers of flat wires in each circle of flat wires is connected to one second group of flat wires in the other one of the two adjacent layers of flat wires through one connection segment; and
the connection segment for connecting the two second groups of flat wires in the two adjacent circles of flat wires is located at one axial end of the motor stator, and the connection segment for connecting the two second groups of flat wires in the same circle of flat wires is located at the other axial end of the motor stator.

11. The flat wire motor according to claim 10, wherein a difference between the number of stator slots crossed by the connection segment for connecting the two second groups of flat wires in the two adjacent circles of flat wires and a number of stator slots crossed by the connection segment for connecting the two first groups of flat wires in the two adjacent circles of flat wires is 1.

12. The flat wire motor according to any one of claims 5 to 11, wherein the plurality of layers of flat wires comprise a first layer of flat wires, a distance between the first layer of flat wires and a central axis of the motor stator is less than a distance between another layer of flat wires and the central axis of the motor stator, and one of flat wires of one first group of flat wires in the first layer of flat wires is connected to one second group of flat wires in the first layer of flat wires through one connection segment.

13. The flat wire motor according to claim 12, wherein the plurality of layers of flat wires comprise a second layer of flat wires, a distance between the second layer of flat wires and the central axis of the motor stator is greater than a distance between another layer of flat wires and the central axis of the motor stator, and one of flat wires of one first group of flat wires in the second layer of flat wires is connected to one second group of flat wires in the second layer of flat wires through one connection segment; and
a difference between a number of stator slots crossed by the connection segment for connecting the first group of flat wires and the second group of flat wires in the second layer of flat wires and a number of stator slots crossed by the connection segment for connecting the first group of flat wires and the second group of flat wires in the first layer of flat wires is 1.

14. A powertrain, wherein the powertrain comprises a reducer and the flat wire motor according to any one of claims 1 to 13, and the flat wire motor is in transmission connection to the reducer.

15. A vehicle, wherein the vehicle comprises wheels and the powertrain according to claim 14, and the powertrain is configured to drive the wheels.
